(19) Europäisches Patentamt / European Patent Office / Office européen des brevets

(11) **EP 3 571 773 B1**

(12) **EUROPEAN PATENT SPECIFICATION**

(45) Date of publication and mention
of the grant of the patent:
**11.10.2023 Bulletin 2023/41**

(21) Application number: **18701928.6**

(22) Date of filing: **23.01.2018**

(51) International Patent Classification (IPC):
**H04B 1/3827** $^{(2015.01)}$

(52) Cooperative Patent Classification (CPC):
**H04B 1/3838; H04W 4/023; H04W 4/029; H04W 24/02;** G08B 25/10; H04W 4/80; H04W 4/90; H04W 84/22

(86) International application number:
**PCT/GB2018/050190**

(87) International publication number:
**WO 2018/134629 (26.07.2018 Gazette 2018/30)**

(54) **ANTENNA SYSTEM**

ANTENNENSYSTEM

SYSTÈME D'ANTENNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.01.2017 GB 201701145**

(43) Date of publication of application:
**27.11.2019 Bulletin 2019/48**

(73) Proprietor: **Vodafone IP Licensing Limited
Newbury, Berkshire RG14 2FN (GB)**

(72) Inventor: **ESSA, Mostafa
London
Greater London W2 6BY (GB)**

(74) Representative: **Boult Wade Tennant LLP
Salisbury Square House
8 Salisbury Square
London EC4Y 8AP (GB)**

(56) References cited:
**EP-A1- 2 958 347        WO-A1-2013/190410
WO-A1-2016/058938**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the invention

The present invention relates to a communication system that adapts in response to detecting the presence of objects, such as living organisms, in the vicinity of a transmitter within the communication system. The present invention also relates to a method of controlling a communication system.

### Background of the invention

Mobile networks face a large number of technical and regulatory issues due to external environmental changes, which may impact a network's EMF compliance and/or connectivity. EMF compliance rules are designed to aid public health and safety and to safeguard human health against the rapidly growing number of wireless technologies deployed. Whilst it is important to be mindful of risks to public health, mobile network performance would be degraded if public EMF exposure were eliminated entirely.

Dynamic and unpredictable changes in the network ecosystem exacerbate such problems. For instance, various physical obstructions (including, for instance, new buildings, growing trees, construction sites and advertising panels) can degrade network performance or impose new constraints on the network if the network operator seeks to avoid exposing the public to excessive EMF doses. These external factors can impact the EMF safety zones for radio antennas or cut-off the microwave link line-of-sight (LOS) beams. In the case of radio antennas, such external obstacles may impact EMF compliance and increase the risk of harming humans who approach too closely to a transmitter. Moreover, in the case of microwave LOS transmitters, new obstructions may cut LOS beams, potentially leading to a loss of connectivity between Radio Access Network elements and reducing coverage and service quality.

Such external obstacles can be variable and unpredictable. In the case of problems relating to EMF compliance, normal access processes for mobile macro sites are insufficient to cover or predict ecosystem variations immediately and existing solutions are unable to react intelligently to such variations. Standard processes depend on preventing human beings or obstacles in an EMF compliance zone, but they cannot react quickly and effectively to new obstacles.

US-5,440,290 A describes an antenna with proximity detection that only switches-off based on a predefined hazardous range.

US-7,937,124 A describes a mobile station antenna that adjusts the mobile handset's array of antenna elements when a foreign object is detected.

Further background information demonstrating potential problems of existing systems may be found here:

http://info.bannerengineering.com/cs/groups/public/documents/literature/03420.pdf
http://www.icnirp.org/cms/upload/publications/ICNIRPemfgdl.pdf
http://www.who.int/peh-emf/about/WhatisEMF/en/index1 .html

There is required a system and method that overcomes problems in conventional systems.
WO201319041 0A1 describes a hybrid RF-optical link for mobile communication devices.
WO2016058938A1 describes transmission power control.
EP2958347A1 describes a scheduling method and scheduling controller for wireless-connected apparatus.

### Summary of the invention

Against this background and in accordance with a first aspect, a communication system as defined in claim 1 is provided. In accordance with a second aspect, a method as defined in claim 13 is provided.

The present invention relates to a communication system that employs sensors to detect objects and obstacles in the vicinity of transmitters within the communication system. The communication system, which may form part of a telecommunications network, is configured to adapt dynamically and intelligently to the presence of such obstacles so as to ensure that living beings, in particular, are not exposed to harmful doses of EMF radiation. This may be achieved whilst maintaining network performance in certain scenarios. Such benefits can be obtained by providing sensor data and information describing the current operations of the communication system to a self-organising network (SON) server or other processor. This enables decisions regarding the management of the communication system to be made automatically and in a more optimised way, taking account of current network operations (e.g. overall network performance and capacity) and current EMF exposure risks (potentially at numerous sites), enabling appropriate action to be taken in a timely manner with relatively few or no detrimental effects on the overall communication system's performance.

EMF exposure risks may be assessed using mathematical models of current operations of the communication system (e.g. the power presently being output) and the field conditions in which the communication system is situated (e.g. the proximity of living beings or buildings). This may enable the communication system to be made safe using data describing current field conditions and current operating parameters. In some cases, the mathematical models may indicate that only minor adjustments (e.g. a small adjustment of a transmission power or tilt of an antenna) to the communication system are required in order to ensure that the risk of excessive EMF exposure (e.g. breaching a threshold) is reduced. This may provide advantages over existing methods, which simply cease operating immediately upon detection of a human within a predetermined hazardous zone. Many aspects of the present invention provide such advantageous technical effects.

Against the background described above, and in accordance with a first aspect, there is provided a communication system having operating parameters, the communication system comprising: a transmitter; a sensor for providing data describing a detected object; and a controller configured to: determine new operating parameters for the communication system, based on current operating parameters and the sensor data; and cause the communication system to continue transmitting with the new operating parameters.

The communication system may utilise any known wireless telecommunication technologies including radio antennas and microwave line-of-sight (LOS) transmission. The wireless telecommunication technologies may form part of a cellular telecommunications network that could comply with any existing standard such as 2G, 3G or LTE, or any future standards. Optionally, the communication system may comprise (or be) any number of telecommunications networks, base stations, access points, eNodeBs, or any other means suitable for transmitting data. Advantageously, the present invention may be installed in any existing network to ensure EMF compliance without deviating from any agreed standards.

Determining new operating parameters for the communication system based on current operating parameters and the sensor data comprises receiving current operating parameters and sensor data at a controller. Optionally, performing the determination based on the current operating parameters and the sensor data may mean that the controller establishes operating parameters for the communication system that ensure that the detected object would at its current position not be exposed to excessive EMF doses when the new operating parameters are used.

Operating parameters could relate to a single transmitter or could comprise information about a plurality of transmitters in a network. For instance, operating parameters may describe the operations of a transmitter in a network and its nearest neighbour. Alternatively, operating parameters may comprise data describing operations of all transmitters in a telecommunications network. Advantageously, adjustments to operating parameters may be determined so as to reduce disruption to quality of service.

Optionally, the controller may be configured to determine that an object is too close to transmitter. On this basis, the controller may then determine new operating parameters for the communication system that cause a transmitter to adjust its operations such that the position of the object is no longer at a position that is too close to transmitter. The location of the object may be too close to transmitter because it is unsafe for a human to be located at that position due to excessive EMF exposure at that point. Alternatively, the position of the object may be determined to be too close to transmitter because the object is likely to impact the communication system's efficacy in its current position. Therefore, the controller may determine new operating parameters that seek to mitigate this reduction in the performance of communication system. For example, a transmission power, tilt, frequency or radiation pattern of a transmitter in the communication system may be altered to improve network performance.

The sensor may be associated with a transmitter or it may be a separate component that is not associated with a particular transmitter. The sensor may be configured to capture sensor data for a single transmitter or any number of transmitters. For example, a sensor may be located remotely from the transmitter but able to provide data in relation to the transmitter via mathematical and/or geometric transformations. The sensor may comprise a plurality of sensors and may use one or more of a number of technologies including, for example, ultrasound sensors, laser proximity sensors, or any combination thereof. The sensors may also comprise an imaging system that uses visible light and is configured to provide images from which proximity data are derivable.

Optionally, the controller may further be configured to determine whether the current operating parameters need to be changed based on the current operating parameters and the sensor data, wherein the location of the object is unsafe with the current operating parameters and safe with the new operating parameters.

Whether the location is safe or unsafe may be assessed by considering the ERIP of the transmitter and the SAR at the location of the object. Advantageously, modelling radiation doses in this way enables precise determination of operating parameters that would be safe for a human at their current position.

The controller may be configured to: determine a safe distance or a safe range of distances from the transmitter for the current operating parameters; and cause the communication system to continue transmitting with the new operating parameters when the sensor data indicates that the object is not within a safe distance. Alternatively, the controller may be configured to determine a distance other than a safe distance, such as an unsafe distance or a range of unsafe values, and determine whether the object is at an unsafe distance from the transmitter. The safe and/or unsafe ranges could be sets of values indicative of distances but not necessarily measured in units of distance. For instance, values of time (e.g. the time between a sensor signal being emitted and reflected back to the sensor) could be used to assess safety. This may provide a quick and efficient way of ensuring that communication system operating parameters are safe.

Optionally, safe values of distance data may be stored in association with values indicating the directions in which such values may be considered safe. For instance, a transmitter may transmit anisotropically, and there may therefore be different safe distances in different directions. In other words, a safe distance in a first direction may not be a safe distance in a second direction. In this case, a safety profile for a particular transmitter may comprise a lobe or a region of space defining safe positions, but this lobe or region of space need not necessarily be isotropic.

Optionally and alternatively, the controller may be configured to: determine an indication of incident radiation received at the object from the transmitter based on the sensor data and the current operating parameters; and cause the communication system to continue transmitting with the new operating parameters when the incident radiation received at the object is above a threshold value. This approach may enable determination of whether an object at a given location is safe without explicitly determining a distance value that would be safe. Advantageously, this may enable the quick and efficient adjustment of communication system operating parameters to values that are safe.

The controller is configured to determine the new operating parameters so as to decrease an incident radiation received at the object from the transmitter. This advantageously reduces the risks of harm to living beings due to excessive EMF exposure.

Optionally, the controller is further configured to: repeat the determination of the new operating parameters for the communication system, based on new sensor data obtained after an interval; and cause the communication system to continue transmitting with the new operating parameters. The interval may be an interval of time. Advantageously, repeating the determination of new operating parameters may enable the communication system to provide improved QoS soon after an obstacle is cleared. The interval between repetitions may be relatively small, so as to ensure that the communication system reacts rapidly to changing conditions. In some cases, the communication system may continuously repeat this determination.

Preferably, the sensor data is proximity data indicating proximity of the object in relation to the transmitter. This may advantageously enable EMF doses to be reduced. However, sensor data need not be proximity data. For instance, in a microwave LOS system, the sensor data may be binary data indicating whether a blockage is in the LOS. Additionally or alternatively, the sensor data could comprise data indicating a time for a sensor signal to reflect back to the sensor from an obstacle.

Optionally, the controller may be configured to cause the communication system to continue transmitting with the new operating parameters based on any one or more of: an analysis of a duration of time in which the object is detected by the sensor; an analysis of a reflection footprint of the object; and an analysis of a pattern of motion of the object. Advantageously, the controller in the communication system may identify a potential obstacle that could negatively impact upon QoS or receive excessive EMF doses, but these further checks enable false positives to be identified using pattern recognition and/or artificial intelligence.

Preferably, the communication system further comprises at least one infrared sensor configured to generate infrared data describing the detected object, wherein the controller is configured to: analyse the infrared data to determine if the object is a person or an animal; and cause the communication system to continue transmitting with the new operating parameters based on the analysis of the infrared data. This may comprise performing motion detection and analysis of the infrared reflection so as to classify an object based on its apparent temperature, infrared signature, speed and direction of motion, and any other data derivable from the infrared sensor data. Advantageously, the risks of negatively impacting QoS due to false positives (such as those due to for example, cars, drones, planes, animals and statues) may be reduced significantly. Each transmitter in the communication system may be equipped with one or more infrared sensors for such false positive detection. Furthermore, such data may be provided to a SON solution to improve overall management of a communication system.

Optionally, adjusting the operating parameters of the communication system may, in any aspect of the present invention, comprise any one or more of: a transmission power of any transmitter in the communication system; an orientation of any transmitter in the communication system; a radiation of pattern any transmitter in the communication system; and a transmission frequency of any transmitter in the communication system. Performing adjustments to such a diverse range of operating parameters ensures that QoS disruption may be reduced.

Preferably, the controller is configured to determine operating parameters based on an equivalent isotropically radiated power (herein denoted ERIP) of the transmitter. This may further or alternatively comprise calculating the SAR for an object. Advantageously, this enables the communication system to extend or decrease its coverage dynamically in a way that ensures that QoS degradation is kept to a relatively low level whilst ensuring that EMF exposure is kept within acceptable bounds. Calculations of ERIP and SAP may be performed using equations 2 and 3 (shown below).

The communication system further comprises a second transmitter, wherein the controller is configured to determine the new operating parameters so as to increase an incident radiation received at the object from the second transmitter. The second transmitter may be the nearest neighbour to the first transmitter in a cellular network, or could be a non-nearest neighbour. In any case, the second transmitter is a transmitter that has spare capacity and is able to compensate for a reduction in radiation received at the object from the first transmitter. The communication system may comprise any number of additional transmitters and the transmitters need not be of the same technology type.

Preferably, the communication system comprises a second sensor associated with the second transmitter for providing second sensor data describing a second detected object, wherein the controller is configured to: determine new operating parameters at which the second sensor data is a safe value, based on current operating parameters and the second sensor data; and cause the communication system to continue transmitting with the new operating parameters. Advantageously, the second transmitter may be configured to provide sensor data to the controller, which allows the controller to manage operations of a plurality of transmitters dynamically so as to ensure that all transmitters contribute to providing acceptable QoS.

The controller is configured to determine new operating parameters so as to compensate for a reduction in incident radiation received at the first object from the first transmitter with an increase in incident radiation received at the first object from the second transmitter. Advantageously, this enables the second transmitter to provide capacity to maintain QoS for mobile devices in the vicinity of first transmitter that may be impacted by a reduction in incident radiation from the first transmitter. Moreover, the controller is configured to determine, prior to instructing any compensatory changes to the operating parameters, whether the second transmitter would irradiate an object in the vicinity of the second transmitter excessively. In other words, the controller may prevent the second transmitter from providing compensatory adjustments if doing so would lead to it violating its own safety range. This may be performed based on the second sensor data and the operating parameters, using the SAR and/or ERIP formulae.

Preferably and advantageously, the controller may form part of a remote (self-organising network) SON server. The SON server may interface with an OSS or TX management server to manage effectively the operations of the communication system.

A method of controlling a communications system transmitting with operating parameters is also provided, the method comprising: receiving data describing a detected object; determining new operating parameters, based on current operating parameters and the data describing the detected object; and causing the communication system to continue transmitting with the new operating parameters.

Optionally, the method may comprise determining whether the current operating parameters need to be changed based on the current operating parameters and the data, wherein the location of the object is unsafe with the current operating parameters and safe with the new operating parameters. The communication system on which the method is performed preferably comprises a transmitter.

The method may additionally comprise determining a safe distance from a transmitter for the current operating parameters; and causing the communication system to continue transmitting with the new operating parameters when the data indicates that the object is not within the safe distance.

Optionally, the method may further comprise determining an indication of incident radiation received at the object from the transmitter based on the data and the current operating parameters; and causing the communication system to continue transmitting with the new operating parameters when the incident radiation received at the object is above a threshold value.

Preferably, the method may comprise determining the new operating parameters so as to decrease an incident radiation received at the object from the transmitter.

Optionally, the method may comprise repeating the determination of the new operating parameters for the communication system, based on new sensor data obtained after an interval; and causing the communication system to continue transmitting with the new operating parameters.

Optionally, the method may comprise receiving proximity data indicating the proximity of the object in relation to the transmitter from a proximity sensor.

Preferably, the method comprises continuing transmitting with the new operating parameters based on any one or more of: an analysis of a duration of time in which the object is detected by the sensor; an analysis of a reflection footprint of the object; and an analysis of a pattern of motion of the object.

Optionally, the method further comprises receiving infrared sensor data describing the detected object and: analysing the infrared data to determine if the object is a person or an animal; and causing the communication system to continue transmitting with the new operating parameters based on the analysis of the infrared data.

Preferably, the method comprises determining new values of: a transmission power of the transmitter; an orientation of the transmitter; a radiation pattern the transmitter; and a transmission frequency of the transmitter.

The method optionally comprises determining operating parameters based on an equivalent isotropically radiated power of the transmitter.

The method further comprises determining new operating parameters so as to increase an incident radiation received at the object from a second transmitter in the communication system.

The method may further comprise receiving second sensor data describing a second detected object in relation to a second transmitter and: determining new operating parameters at which the second sensor data is a safe value, based on current operating parameters and the second sensor data; and causing the communication system to continue transmitting with the new operating parameters.

The method further comprises determining new operating parameters that compensate for a reduction in incident radiation received at the first object from the first transmitter by increasing in incident radiation received at the first object from the second transmitter.

Preferably, the method may be executed by a controller that forms part of a remote self-organising network server.

Optionally, a method of upgrading an existing communication system is provided, the method comprising configuring the existing communication system to provide any of the functionality disclosed herein.

In a preferred aspect, the present invention provides an apparatus and a corresponding method for managing operations of a telecommunications system, which may be an entire telecommunications network, using data generated by one or more proximity sensors that measure distances to objects in the vicinity of one or more transmitters and/or receivers. Any transmission technologies may be used in conjunction with the present invention.

One or more proximity sensors may be installed in the vicinity of the one or more transmitters or receivers. Sensors may be mounted on, within, or externally to the transmitters or receivers. In the case of an antenna, the one or more sensors may be installed inside the housing of the antenna. In the case of a microwave dish, the one or more sensors may be installed on the circumference of the microwave dish. Alternatively, the sensors may be installed entirely remotely from the transmitter.

The data generated by a proximity sensor may indicate the distance measured to the nearest obstacle in a particular direction. The sensors may be capable of measuring distances or proximity to objects in a plurality of directions by adjusting the positions and orientations of the sensors.

A controller may be configured to adjust the operations of the one or more transmitters based on the measured proximity data. For instance, the controller may be configured to compare calculated and/or predetermined safe distances with the measured values of proximity data. The safe distances may be calculated based on safety considerations (such as EMF dosage guidelines), geographical considerations, network efficacy considerations, or any combination thereof.

In a relatively straightforward aspect, if the controller detects an object (for instance, a human) in the immediate vicinity of a transmitter, the controller may determine that the measured distance to the object (the human) is below the calculated safe distance, and so the controller may instruct the transmitter to decrease its power output to avoid causing harm to the object (or specifically in this example, the human).

Alternatively, the controller may determine that a building is between transmitter (for instance, a microwave LOS dish) and its corresponding receiver, and the controller may therefore determine that a telecommunications network will not operate as desired. In this case, the controller may issue an operator alert or, in accordance with the claimed invention, the controller automatically instructs another transmitter to increase its power output in order to compensate for the losses due to the obstruction.

The controller may be configured to consider a combination of factors when calculating safe distances. For example, the controller may determine that increased power output is required to maintain operation of a network when an obstacle has appeared (e.g. a new building). However, the controller may determine that it may not be possible to increase the power output of the optimal transmitter, because increasing the power output of that particular transmitter would lead to excessive EMF exposure. Therefore, the controller may determine that other transmitters in the system should increase their power outputs to maintain effective operations. The controller may also be configured to adjust the tilts or directions of a specific transmitter, or a system of other transmitters in the system, thereby altering the range of coverage, in order to compensate for the changes in power output that the controller deems necessary. Therefore, the controller may be required to consider the geographical layout of the network, safety considerations and connectivity requirements in conjunction.

False positives (due to, for example, birds and drones) may be addressed using movement pattern recognition and reflection footprint algorithms. These may be managed via a SON solution. The algorithms may incorporate artificial intelligence (AI) methods.

In a further aspect, the present invention provides an apparatus for managing operations of a telecommunications system comprising: a proximity sensor configured to generate data indicating the proximity of an object to a transmitter and/or receiver in the telecommunications system; and a controller configured to compare the indicated proximity with a threshold value and take an action based on the comparison.

Optionally, the controller is configured to retrieve data from an operations support system database or from radio planning geo-information (RPGI) software in order to determine initial acceptable threshold values.

In some aspects, a plurality of proximity sensors is associated with the transmitter or receiver.

Optionally, the number and geometry of the proximity sensor or sensors are arranged so as to correspond to the transmission or reception area or node of the transmitter or receiver.

Preferably, sensor redundancy may be employed.

The apparatus may further comprise an infrared sensor configured to generate infrared data. In this case, the controller is configured to analyse the infrared data to determine whether the sensed object is living and/or human.

The controller may be located remotely from the transmitter or receiver site, and preferably in a remote SON server.

The controller may be configured to classify the nature of the sensed object based on: the duration of time the object spends in the view of the proximity sensor or sensors; or an analysis of the reflection footprint of the object; or an analysis of the pattern of motion of the object.

The controller may be further configured to perform at least one action selected from a group comprising: produce an operator alert (e.g. a message); to adjust (e.g. up or down) the power output of the transmitter (preferably to a non-zero value or power output greater than zero) with which the proximity sensor or sensors is associated; to adjust the power output of at least one transmitter in the telecommunications system other than the transmitter or receiver with which the proximity sensor or sensors is associated; to adjust the tilt angle and/or orientation of the transmitter with which the proximity sensor or sensors is associated; or to adjust the tilt of at least one transmitter in the telecommunications system other than the transmitter with which the proximity sensor or sensors is associated. The controller may perform one or more than one of these actions, based on the comparison, in any combination.

The threshold value may optionally be related to a safe distance between the sensed object and a transmitter in the telecommunications network. The safe distance between the sensed object and a transmitter in the telecommunications network may be related to a maximum safe EMF dosage at the location of the sensed object.

The safe distance may be calculated based on the ERIP of a transmitter in the telecommunications network.

In some aspects, the EMF/LOS embedded antenna system may, for the EMF case, use an ERIP equation (equation 1 shown below) to calculate safety distances (which could be determined in accordance with ICNRIP, SC6 or any other protocol) for each sector and compare the safety distance with on-field measurements of a current distance. LOS solutions may take the clear beam distance as reference reading. For instance, the LOS solution may determine that an obstacle is in the line-of-sight if sensor data indicates that the object is at less than a predefined distance from the transmitter in a specified direction.

Equation 1: [Frequency Band ERIP] =

$10 \times \text{Log}(P_{TX} \text{ Frequency Band}/0.001) + [\text{Gain Frequency Band}] - [\text{Feeder loss Frequency Band}]$

Equation variables may be obtained from the radio access network (RAN) operations support system (OSS) and from data obtained from field surveys. The free distance, such as the distance to an obstacle, may be calculated for each sector (or measured using a sensor) by the EMF/LOS embedded antenna system and compared with the safety distance. The embedded antenna system may then adjust the network immediately to keep people in a safe zone or to ensure that a microwave LOS is kept clear.

Furthermore, the safe distance may be calculated by summing the ERIP of each band in a sector of the telecommunications network and inputting this value into the inverse specific absorption rate (SAR) equation to obtain the hazardous distance for the sector.

The controller may be configured to identify transmitters in the telecommunications network that are suitable candidates for compensating for a change (e.g. reduction) in power output of the transmitter with which the proximity sensor is associated. The controller determines whether compensating for a change (e.g. reduction) in power output of a first transmitter by changing (e.g. increasing) the power output of a second transmitter will result in a violation of the second transmitter's safe distance and, if changing (e.g. increasing) the second transmitter's power output would result in a violation, excluding the second transmitter from the SON's compensation calculations.

In certain cases, the controller may be configured to cease operation of the transmitter if the data generated by the proximity sensor or sensors indicates the distance between a transmitter and the object is below a threshold value.

In one aspect, the transmitter or receiver is a microwave line-of-sight transmitter or receiver. In this case, the proximity sensor or sensors may be arranged on the circumference of a microwave line-of-sight dish.

The controller may be configured to determine whether the sensed object is likely (e.g. by calculating a probability and comparing this to a predetermined probability value) to interrupt operation of a portion of the telecommunications network.

Optionally, an operator alert may be generated if it is determined that operation of a portion of the telecommunications network is likely to be interrupted due to the presence of an object in the line-of-site of the transmitter.

In some aspects, the controller is configured to determine if operation of a portion of the telecommunications network is likely to be interrupted due to the presence of an object in the line-of-site of the transmitter; and, if the controller determines that operation is likely to be interrupted, the controller is further configured to increase the power output of another line-of-site transmitter in the telecommunications system.

In certain aspects, the controller can be configured to use sensor data generated by a plurality of sensors to calculate the size of the object.

In any of the above cases, the calibration of the system may be assessed by comparing sensor readings with initial readings.

In certain cases, the present invention may of course detect a human in the vicinity of a transmitter and perform a simple adjustment of the power output and/or continue transmitting, without impacting functionality.

Any of the above steps may be defined in terms of a method of managing operations of a telecommunications system. In particular, the method comprises the steps of: generating data indicating the proximity of an object to a transmitter and/or receiver in the telecommunications system; and comparing the indicated proximity with a threshold value and taking an action based on the comparison.

Aspects of the present invention may be especially beneficial in a number of scenarios. For instance, the present invention may be used to generate warning alerts to operation teams before any LOS problems occur for transport microwave dishes. Additionally, on-site warning messages may be generated when humans (e.g. residents or network technicians) intercept the EMF risk zone. This could provide a last line of defence for health and safety procedures.

Moreover, immediate notifications for health and safety personnel and operational teams may be generated as soon as any violation occurs. These may be generated and routed according to a smart responsibility matrix. The present invention may also be used to monitor indoor antenna systems, warn if any residents intercept the EMF risk zone, and also to alert the network engineer if re-designing is required.

The present invention may be used during indoor network design to involve EMF risk clearly for radio design and technical teams. Furthermore, the present invention may keep humans that approach antennas/microwave dishes safe, as it may be configured to retune the cell configuration to reduce the EMF risk zone whilst at the same time maintaining efficient network performance via a SON solution, such as iNetwork.

At least two types of sensors may be used in various combinations. For instance, invisible laser proximity sensors and ultrasonic proximity sensors are particularly advantageous in aspects of the present invention. Multiple sensors for each sensor may be installed to eliminate any false alarm triggering. This may be achieved by providing sensor redundancy and/or by accounting for various signal types.

False positives due to birds, drones may be detected and addressed via movement pattern recognition and reflection footprint algorithms. This may be managed via the SON solution.

The propagation area of an antenna or of antennas may be fully covered by mapping the sensor coverage range and azimuth according to the antenna radiation pattern. For example, if the beam width of the antenna is 63 degrees, then matching may be achieved using two or three sensors with relatively small beam widths to create a sensor coverage that is of a similar form as the beam width.

The number of sensors required for full coverage may depend on the antenna beam width and form. For instance, for a normal beam width antenna (most common antenna), five sensors antennas will provide full coverage. For indoor omni antennas, 12 short-range sensors will provide full coverage. For line-of-sight scenarios, a minimum of 8 long-range sensors are required, surrounding the microwave dish. The sensors will be located with the desired warning range. It is practically possible to mount the sensors without causing problems.

Detection system parameters such as alarm thresholds may be initially determined and/or set according to data collected on the SON solution. For instance, TX parameters may be determined from the network OSS and on-field data retrieved from external databases. These data may be combined by the SON solution automatically and the SON may then insert such data into the inverse of the specific absorption rate (SAR) equation (Equation 2) to conclude the exact threshold.

Equation 2 - SAR equation for each band:

$$\text{Power Density} = ERIP/4^*\pi^*r^2$$

$$R= \sqrt{(ERIP/4^* \pi^* \text{Power Density})}$$

The detection system parameters may be updated dynamically to reflect the changes made by the SON solution by retrieving updates from the OSS and external databases.

Algorithms may be employed to detect false positives. For instance, an AI algorithm may combine parameters such as time (the duration of time that an object spends in proximity to a sensor), reflection footprint (such as the size and/or shape of an object) and movement pattern (such as speed and direction). The false positive algorithms may differentiate between horizontal and lateral movement, flying objects from non-flying objects, and small and large objects. Moreover, by adding an infrared sensor, the present invention may differentiate living objects from non-living objects. Any of these factors may be used in any combination to improve the algorithm's accuracy by combining a plurality of sensors readings to arrive at a final conclusion regarding the nature of an object.

Initial sensor/system thresholds (which may be distances or sensor configurations rather than an ERIP value) may be calculated and/or set up either as part of an initialisation process and/or a calibration process. For example, the SON may retrieve data from RPGI software and/or OSS databases for all sectors and then use such data to calculate the safety range for each sector. This may be stored as a safety profile, which may be used once an alarm is triggered or when an antenna is nominated by the SON as a candidate as a best neighbour that may be suitable for expanding its coverage (e.g. to compensate for a reduction in transmissions elsewhere).

An especially advantageous aspect of the EMF solution is defining each sector safety profile mathematically and monitoring, using sensors, if the safety profile is violated. The system may additionally obtain data about, for example, buildings in the potential antenna signal path from a database such as Google Maps, or these may be measured on-site as part of installation and put into a database. In this way, the safety profile may include significantly more information than a "safe distance". For instance, the safety profile could define an irregular region on the ground that accounts for variations in transmission characteristics in different spatial directions due to, for example, local geography, nearby buildings, anisotropic radiation patterns, and numerous other factors that lead to anisotropic propagation of electromagnetic waves.

When an alarm occurs, information may be distributed to allow adjustments to be made or operators to be informed. The information may include the alarmed sector name or any other suitable identifier. The SON will then look up data relating to the alarmed sector (e.g. power and/or frequency bands) and then calculate the ERIP. Before the SON sends any commands to reduce transmission (e.g. via reducing transmission power, adjusting a transmitter tilt, or via any other means), it will identify candidate neighbour sites that may be able increase their coverage. The SON will then evaluate and keep sites that can increase their coverage without violating their own safety range. In other words, the SON will identify neighbour sites that may be capable of compensating for a reduction in transmissions at an alarmed sector and will not exclude such sites from SON calculations. The EMF/LOS detection system may then be updated in view of the changed operating conditions once such checks have been made.

A calibration process may be performed periodically without requiring any system down-time. No down-time is necessary because the system will report the sensor reading for the fixed reference point and if it was the same initial reading then the sensor is in working order, but if it is not the same as initial reading then the sensor will be reported as damaged and/or out of service. In that case, the sensor would need replacement.

The sensor may be configured to detect a living obstacle using an IR sensor that detects a heat signature.

Data from any RPGI software may comprise geographical information for a network and site location and it may be used to allocate candidate neighbour sites that may be suitable for compensating for a power reduction action for the concerned sector. Data from RPGI software and OSS data may be retrieved periodically to be used in a SON database.

The SON will pull up all data from RPGI software and/or OSS databases for all sectors and then calculate the safety range for each sector. This may be achieved by calculating the ERIP of each band in a sector and adding them all together into the inverse SAR equation to get the hazardous distance for the whole sector. If new bands are introduced in the same sector, then the ERIP increases and the hazardous distance also increases. An example methodology for this calculation is shown below.

SAR equation for each band:

$$\text{Power Density} = \text{ERIP}/4*\Pi*r2$$

The SON may then calculate the hazardous distance using Equation 3.

$$\text{Equation 3: Hazardous Distance (r)} =$$

$$\sqrt{[(\text{ERIP\_band\_1}/4*\pi*\text{Allowable Power Density\_band\_1})+(\text{ERIP\_band\_2}/4*\pi*\text{Allowable Power Density\_band\_2})+(\text{ERIP\_band\_3}/4*\pi*\text{Allowable Power Density\_band\_3}) + \ldots]}$$

A safety profile may indicate a hazardous distance for each sector with its current bands and parameter/settings. Therefore, the safety profile may change if new bands are introduced or if the allowable power density differs from one protocol to another. However, the system may adapt itself to such requirements when new rules added.

Hazardous range calculations may be based on the current parameters/settings of each sector and allowable power density limits derived from a safety protocol.

Optionally, when increasing power transmissions at a site, a safe distance will reduce, and this may lead to alarms being raised at that site. This risk is mitigated by determining if causing a neighbour site to expand its coverage area would lead to the neighbour site violating its own safety range (which may be embodied in a safety profile), and then excluding that neighbour from the coverage maintain scenario (i.e. excluding that neighbour from being considered for compensatory adjustments) if necessary. In other words, it may be excluded from a set of candidate rescue sectors nominated by the SON to cover the gap created by decreasing the power of the triggered sector.

Any of the aspects of the invention described above may be used in any combination. Moreover, any of the disclosed methods, steps or actions may be executed as a computer program comprising program instructions that, when executed on a computer cause the computer to perform the method steps described above. The computer may include desktop, laptop, server, embedded computers, integrated circuits, chips embedded in other devices or appliances (such as for example refrigerators) or other processors.

## Brief description of the figures

The present invention may be put into practice in a number of ways and embodiments will now be described by way of example only and with reference to the accompanying drawings, in which:

FIG 1 shows a communication system;
FIG 2 shows a communication system as in FIG 1 comprising further sensors, objects and transmitters;
FIG 3 shows a method of operating a communication system such as that of FIG 1 or FIG 2;
FIG 4 shows a microwave scenario;
FIG 5 shows a radio antenna scenario;
FIG 6 shows a macro-site antenna scenario providing macro-site EMF compliance warnings and SON applications;
FIG 7 shows a micro-site antenna scenario providing micro-site/small cells EMF compliance warnings and SON applications;
FIG 8 shows a microwave dish scenario;
FIG 9 shows a radio EMF solution;
FIG 10 shows a microwave LOS blockage solution;
FIG 11 shows a basic system diagram;
FIG 12 shows communication methods between an operations support system and a SON server;
FIG 13 shows main program functionality;
FIG 14 shows sub-program functionality;
FIG 15 shows an overview of functional architecture of an EMF solution;
FIG 16 shows a hazard-detection procedure in an EMF solution;
FIG 17 shows an overview of functional architecture of an LOS solution; and
FIG 18 shows functionality of an LOS solution.

It should be noted that the figures are illustrated for simplicity and are not necessarily drawn to scale.

## Detailed description of specific embodiments of the invention

The present invention relates to an embedded antenna system that may be used in various scenarios and for many purposes, including ensuring automatic compliance with EMF exposure guidelines and providing LOS pre-blockage warnings.

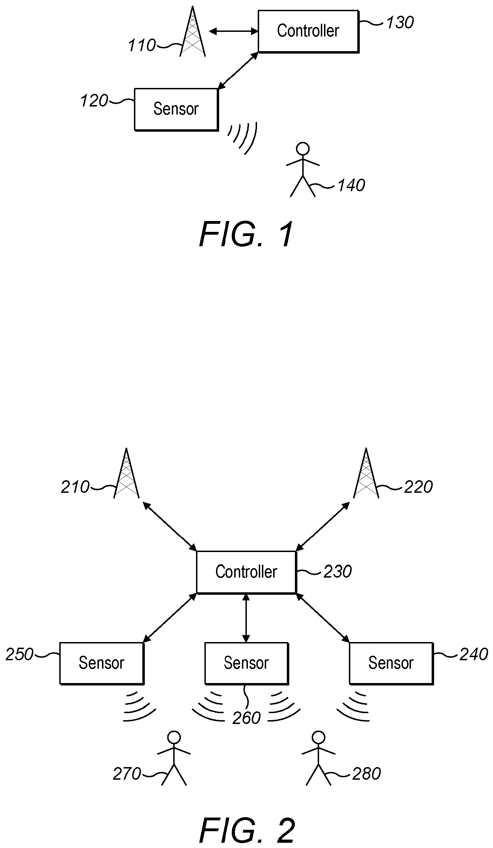

FIG 1 shows an example of such a system. FIG 1 illustrates an embodiment of the invention comprising communication system 100 comprising transmitter 110, sensor 120, controller 130 and object 140.

During operation, communication system 100 is configured to transmit. Transmission is achieved using a transmitter 110 in the communication system 100. Sensor 120 is configured to collect sensor data describing an object 140. The sensor 120 is communicatively coupled to controller 130. Sensor 120 provides sensor data to controller 130 and controller 130 may provide information or instructions to sensor 120. Controller 130 is further communicatively coupled to transmitter 110.

Transmitter 110 provides information about its current operations to controller 130. Controller 130 provides instructions to transmitter 110 that control operations of transmitter 110. The manner in which communication system 100 as a whole operates may be embodied in a set of operating parameters.

The controller 130 is configured to determine new operating parameters of the communication system 100. These new operating parameters are determined based on current operating parameters of communication system 100 and the sensor data. The controller 130 is configured to cause the communication system 100 to continue transmitting with the determined new operating parameters.

Although sensor 120 and transmitter 110 are shown in FIG 1 as being associated with each other, the sensor 120 in FIG 1 need not be associated with the specific transmitter 110. For example, sensor 120 may provide sensor data that is relevant to more than one transmitter 110. For instance, the sensor 120 may be a camera capable of imaging multiple transmitters and objects and therefore sensor 120 may be capable of providing sensor data that are relevant to the operating parameters of many transmitters. In alternative, advantageous embodiments, there may be a plurality of sensors 120 associated with a specific transmitter 110.

In some cases, sensor 120 may not be associated with transmitter 110 at all. Rather, sensor 120 may provide sensor data that is relevant to another transmitter (not shown) in a communication system 100. For example, controller 130 may determine that an action is required in respect of the other transmitter. The action may comprise changing any operating parameters (such as transmission power, orientation, transmission frequency and/or radiation pattern) of the other transmitter. In this case, controller 130 determines, based on this sensor data and current operating parameters of the communication system 100, that operating parameters of the communication system 100 should be adjusted such that transmitter 110 compensates for the action taken in respect of the other transmitter.

Furthermore, although object 140 is depicted as a human in FIG 1, object 140 may be an animal other than a human, or a building, tree or car. Although not shown in FIG 1, controller 130 may be configured to determine the nature of object 140 prior to determining to adjust operating parameters of communication system 100. Additionally, FIG 1 does not depict any specific transmission, sensor or controller technology and it will be appreciated that any disclosed technologies are suitable for use in the system of FIG 1.

FIG 2 shows a further, advantageous embodiment of a communication system. FIG illustrates a communication system 200 that comprises transmitters 210 and 220, controller 230, sensors 240, 250 and 260, and objects 270 and 280.

During operation, communication system 200 is configured to transmit. Transmission is achieved using transmitters 210 and 220 in the communication system 200. Sensors 240, 250 and 260 are configured to collect sensor data describing objects 270 and 280. Sensors 240, 250 and 260 are communicatively coupled to controller 230. Sensors 240, 250 and 260 provide sensor data to controller 230 and controller 230 may provide information or instructions to sensors 240, 250 and 260.

Controller 230 is further communicatively coupled to transmitters 210 and 220. Transmitters 210 and 220 provide information about their current operations to controller 230. Controller 230 provides instructions to transmitters 210 and 220 that control the operations of transmitters 210 and 220. The manner in which communication system 200 as a whole operates may be embodied in a set of operating parameters, which define the operations of transmitters 210 and 220.

The controller 230 is configured to determine new operating parameters of the communication system 200. These new operating parameters are determined based on current operating parameters of communication system 200 and the sensor data. The controller is configured to cause the communication system 200 to continue transmitting with the determined new operating parameters. Causing the communication system 200 to continue transmitting with new operating parameters typically involves causing one or both of transmitters 210 and 220 to operate in a different way. In determining new operating parameters for communication system 200, controller 230 takes account of current operating parameters of transmitters 210 and 220 so as to provide new operating parameters that maintain or improve performance of communication system 200 whilst reducing health risks to living objects such as humans.

In FIG 2, sensors 240, 250 and 260 are not depicted as being associated with a particular transmitter. However, in some embodiments, transmitter 210 may be associated with sensor 250, whilst transmitter 220 may be associated with sensor 240. This may provide sufficient sensor coverage for system 200 to operate effectively. In this embodiment, significant advantages are derived by adjusting transmissions of a particular transmitter, for example transmitter 210, and correspondingly compensating for this reduction by an adjustment of the other transmitter, transmitter 220. In this case, sensor 260 may not be strictly necessary to ensure proper operation of the communication system 200 and sensor 260 may therefore be associated with either or both of transmitters 210 and 220. In other words, sensor 260 may be effectively redundant. Sensor 260 is therefore strictly optional in the system of FIG 2 and communication system 200 may provide numerous advantageous effects even when fewer sensors are used than illustrated in FIG 2. Nevertheless, the inclusion of redundant sensor 260 may be advantageous in that down-time in the event of a failure of sensors 240 and/or 250 may be eliminated. Moreover, the inclusion of redundant sensor 260 may enable a radiation pattern of transmitter 210 and/or 220 to be approximated more closely by the coverage of the sensors in the communication system 200, thereby providing more accurate determinations of various parameters used in determining system safety.

In a further embodiment shown in FIG 2, sensor 250 is a proximity sensor associated with transmitter 210, sensor 240 is a proximity sensor associated with transmitter 220, and sensor 260 may comprise one or more infrared sensors associated with transmitter 210 and/or transmitter 220. In this way, proximity data generated by sensors 240 and 250 may be supplemented with infrared data that enables controller 230 to determine whether objects 270 and/or 280 are living. For instance, infrared sensor 260 may provide infrared data indicating that object 270 is living and proximity sensor 250 may provide proximity data indicating that object 270 is too close to transmitter 210. Controller 230 determines, based on this sensor data, that a transmission power, tilt, or any other characteristic of transmitter 210 should be reduced so as to reduce the radiation incident on object 270. Additionally, object 280 may be a non-living object such as, for example, a statue. A statue might appear to be a living human based on a reflection fingerprint analysed solely using proximity data. However, an infrared sensor 260 may help to prevent network down-time due to false positives by distinguishing such non-living objects from genuine living objects that may be harmed by excessive EMF exposure.

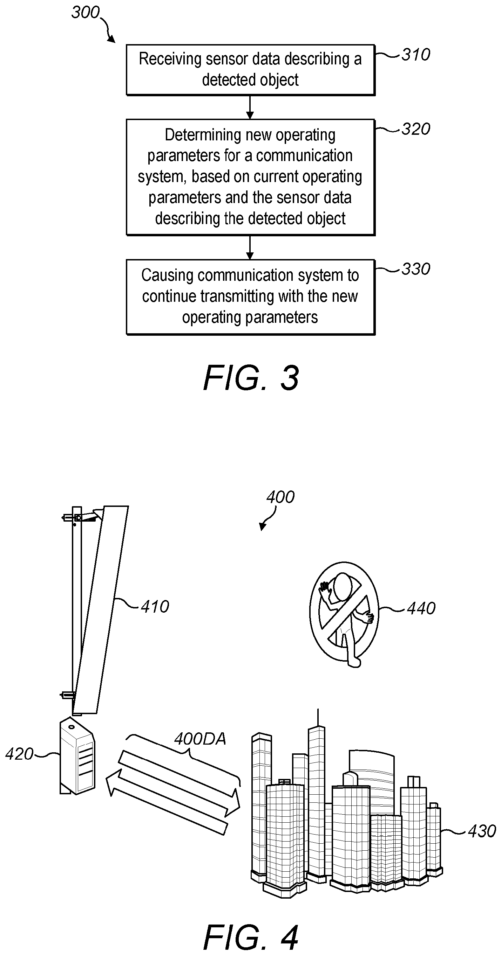

FIG 3 is a flow diagram showing a method 300 of controlling operations of a communication system in accordance with an embodiment of the present invention. FIG 3 shows a method 300 comprising steps 310, 320 and 330.

The first step 310 of method 300 comprises receiving sensor data describing a detected object. Step 320 then comprises determining new operating parameters for a communication system based on current operating parameters and the sensor data describing the detected object. Method 300 further comprises step 330, which comprises causing the communication system to continue transmitting with the new operating parameters.

Method 300 may be used in conjunction with any of the communication systems of the present disclosure. Accordingly, method 300 may further comprise performing any of the functionality performed by controller 130 in FIG 1 and controller 230 in FIG 2.

FIG 4 shows a further embodiment of the present invention in which a communication system 400 comprises a radio antenna 410. Communication system 400 further comprises a distance meter 420, physical obstructions 430 and human obstructions 440. A distance 400DA between distance meter 420 and the human and physical obstructions 430 and 440 is shown.

When communication system 400 is in operation, distance meter 420 collects distance data indicating a distance 400DA between obstructions 430 and 440 and distance meter 420. This distance is used to infer a distance between radio antenna 410 and physical obstructions 430 and 440.

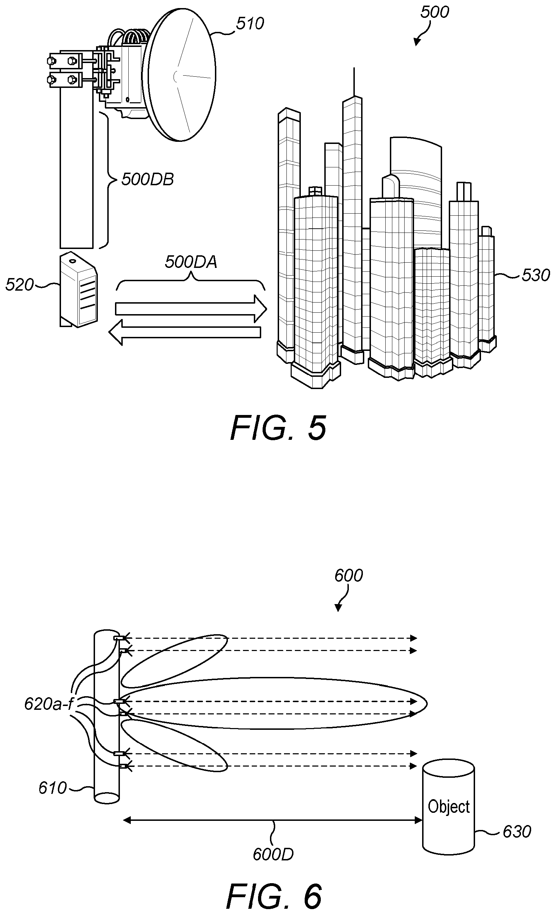

FIG 5 shows an embodiment of the present invention in which a communication system 500 comprises a microwave dish 510. Communication system 500 further comprises a distance meter 520 and physical obstructions 530. A distance 500DA between distance meter 520 and physical obstructions is shown and a precaution distance 500DB is shown between microwave dish 510 and distance meter 520.

During operations of the communication system 500, distance meter 520 collects distance data indicating a distance 500DA between physical obstructions 530 and distance meter 520. Optionally, this distance may be used to infer a distance between microwave dish 510 and physical obstructions 530 by performing geometric calculations taking account of precaution distance 500DB.

Although not shown in FIG 4 or FIG 5, communication systems 400 and 500 may further comprise controllers such as those described in respect of FIG 1 and FIG 2 and such controllers may be configured to perform methods illustrated in FIG 3. For instance, the embodiments of FIG 4 and FIG 5 may be enhanced by the addition of a controller that receives data from distance meters 420 and 520 and controls operations of the communication systems 400 and 500 based on such distance data and on current operating parameters of communication systems 400 and 500. FIG 5 also shows human obstructions 540 that may be resolved by the inclusion of an infrared sensor such as the infrared sensor 260 described in respect of FIG 2.

Although shown as generic distance meters, distance meters 420 and 520 could be Doppler meters, laser meters, or any other type of meters suitable for determining distances to obstructions 430, 440 and 530. Additionally, distance meters 420 and 520 could be cameras that produce images from which distance data may be inferred. Any distance could be provided in metres or any other arbitrary units (including, for example, units of time) suitable for determining the proximity of physical obstructions with respect to radio antenna 410 or microwave dish 510.

A further embodiment of the present invention is shown in FIG 6, which illustrates a system suitable for a macro-site antenna scenario that provides macro-site EMF compliance warnings and SON applications. FIG 6 comprises a communication system 600, transmitter 610, long and/or medium range proximity sensors 620a-f, object 630 and a reflection distance 600D that indicates the proximity of object 630. Proximity sensors 620a-f are arranged so as to provide a sensing range that at least substantially corresponds with a radiation pattern of transmitter 610, which is indicated as lobes in FIG 6.

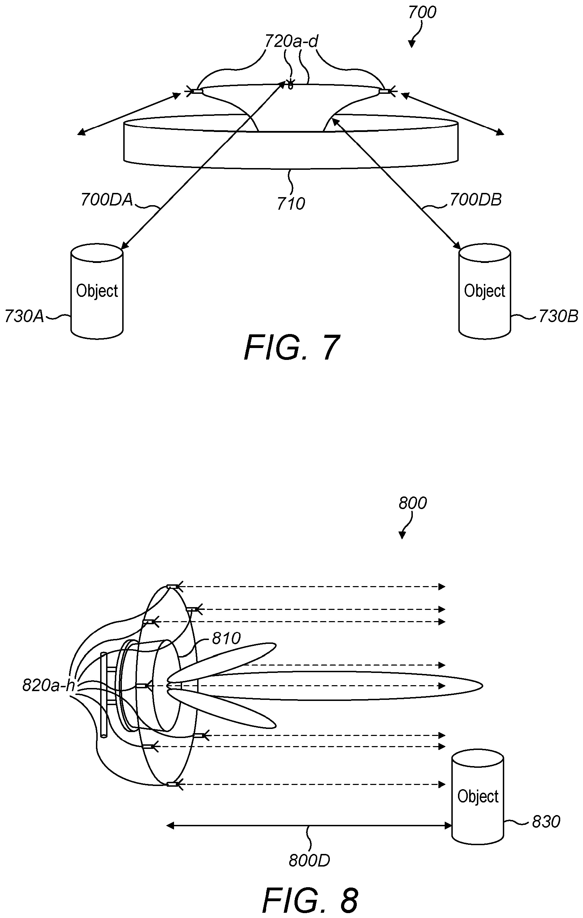

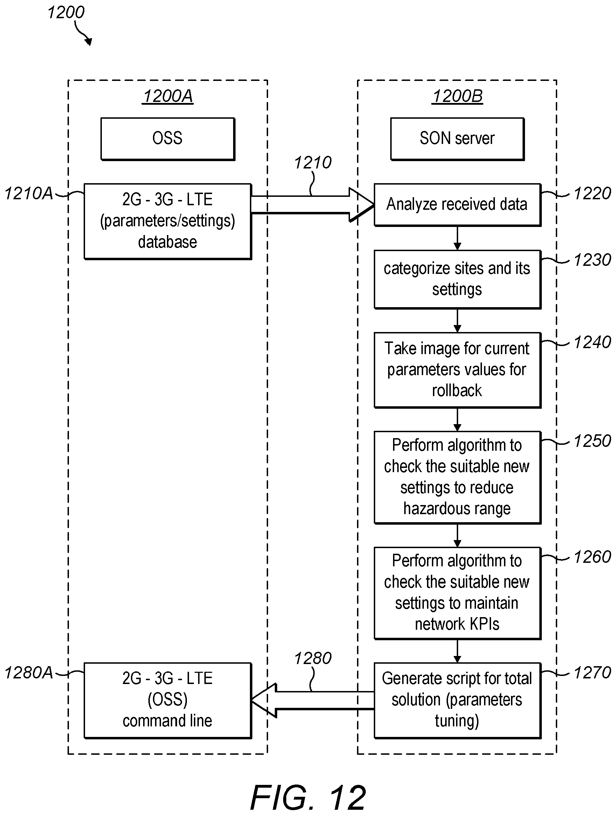

FIG 7 further shows a system suitable for a micro-site antenna scenario that provides EMF compliance warnings and SON applications. The system of FIG 7 comprises communication system 600, transmitter 710, short range proximity sensors 720a-d and objects 730A and 730B. FIG 7 further illustrates reflection distances 700DA, indicating the proximity of object 730A, and 700DA indicating the proximity of object 730B. In FIG 7, proximity sensors 720a-d are arranged so as to provide a sensing range that covers as large an area as possible, to correspond with the radiation pattern of an omni antenna. Although not explicitly shown in FIG 7, 12 short-range antennas may be sufficient to provide full coverage for an omni antenna.

FIG 8 shows a microwave dish LOS blockage warning scenario comprising communication system 800. The communication system 800 comprises microwave dish 810, long range proximity sensors 820a-h, object 830 and reflection distance 800D indicating the proximity of object 830 with respect to microwave dish 810. As depicted in FIG 8, long range proximity sensors 820a-h are arranged circumferentially around microwave dish 810 such that the sensing range at least substantially corresponds with the microwave dish radiation pattern (as depicted by lobes emanating from microwave dish 810).

In use, the communication systems 600, 700 and 800 of FIG 6, FIG 7 and FIG 8 may be configured to relay sensor data to a controller as described in relation to FIG 1 and FIG 2 that may perform methods described in relation to FIG 3. Moreover, in each of the embodiments illustrated in FIG 6, FIG 7 and FIG 8, a plurality of sensors will be installed in the system to cover the antenna/microwave signal beams fully. This is performed so as to simulate the antenna/microwave signal beams and obtain accurate indications of whether objects are at acceptable distances from transmitters. This is shown in FIG 6, FIG 7 and FIG 8 for different antenna types. The mapping process depends on the antenna beam width and form. The propagation area of an antenna or of antennas may be fully covered by mapping the sensor coverage range and azimuth according to the antenna/microwave dish radiation pattern.

The number of sensors required for full coverage depends on the antenna beam width and form. For example, if the beam width of the antenna is 63 degrees, then matching may be achieved using two or three sensors with relatively small beam widths to create a similar beam width form to the antenna's beam width. For a normal beam width antenna (most common antennas), five sensors antennas will provide full coverage. For indoor omni antennas, 12 short-range sensors will provide full coverage. For line-of-sight scenarios, a minimum of 8 long-range sensors are required, surrounding the microwave dish. The sensors will be located with the desired warning range. The range of sensors used is also selected depending on the application. Short, medium and long range sensors are used for radio antennas, while only long range sensors are used for microwave dishes.

Advantageously, it is possible to mount the sensors without causing detriment to the antenna/microwave dish performance.

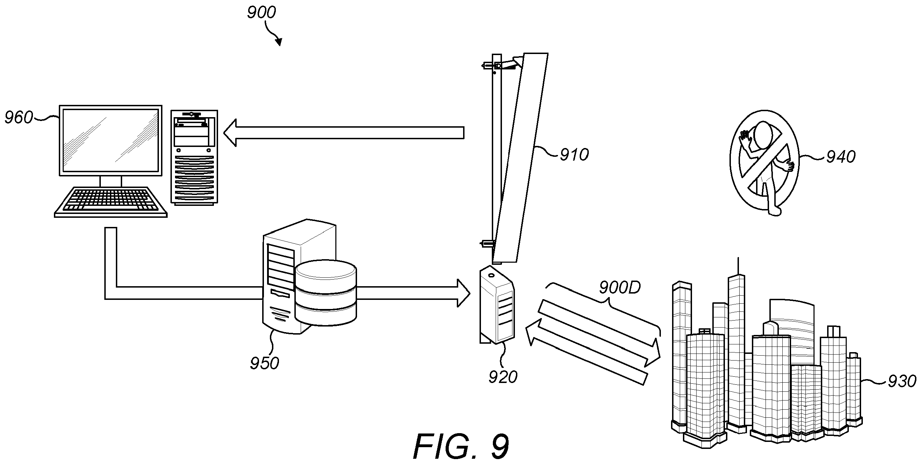

FIG 9 shows a radio EMF solution similar to that of FIG 3, but with more detail of how new operating parameters of the communication system are determined. In particular, FIG 9 shows a further embodiment of the present invention in which a communication system 900 comprises a radio antenna 910, a distance meter 920, physical obstructions 930 and human obstructions 940. A distance 900D between distance meter 920 and the human and physical obstructions 930 and 940 is also shown. Communication system 900 also comprises an OSS server 950 communicatively coupled to radio antenna 910 and distance meter 920. OSS server 950 is further communicatively coupled to a SON solution server 960, which is in turn communicatively coupled to radio antenna 910 and distance meter 920.

When communication system 900 is in use, distance meter 920 collects distance data indicating a distance 900D between obstructions 930 and 940 and distance meter 920. This distance is used to infer a distance between radio antenna dish 910 and physical obstructions 930 and 940. Radio antenna 910 and distance meter 920 provide field information to SON solution server 960, which is configured to communicate with OSS server 950. OSS server 950 then generates system commands to adjust EMF emissions with respect to new field conditions. Additionally, the SON server may notify operator teams of violations immediately and adjust best neighbours (e.g. other transmitters in a communication network that have capacity to increase their transmissions safely) to avoid coverage gaps.

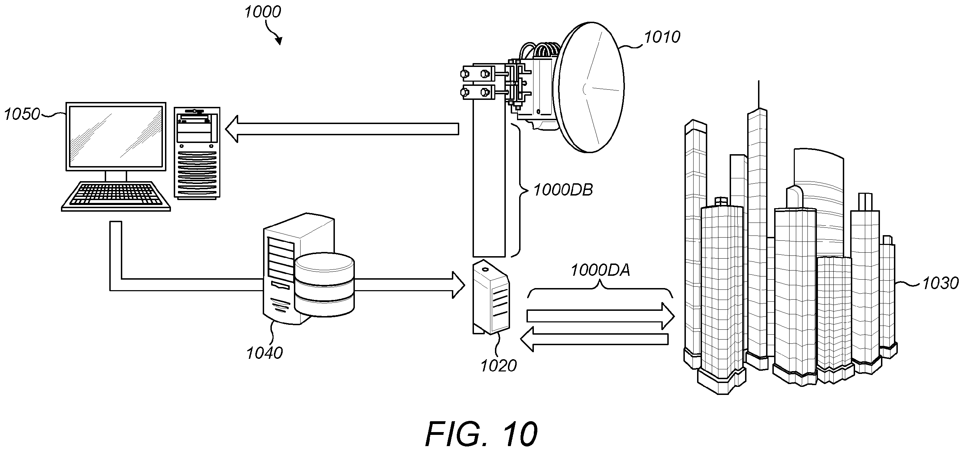

FIG 10 shows a microwave blockage solution similar to that of FIG 4, but provides more detail of how new operating parameters of the communication system are determined. In particular, FIG 10 shows an embodiment of the present invention in which a communication system 1000 comprises a microwave dish 1010, a distance meter 1020 and physical obstructions 1030. A distance 1 000DA between distance meter 1020 and physical obstructions 1030 is shown and a precaution distance 1000DB is shown between microwave dish 1010 and distance meter 1020. Communication system 1000 also comprises a TX management server 1040 communicatively coupled to microwave dish 1010 and a SON solution server 1050, which is in turn communicatively coupled to microwave dish 1010 and distance meter 1020.

During operations of the communication system 1000, distance meter 1020 collects distance data indicating a distance 1000DA between physical obstructions 1030 and distance meter 1020. Optionally, this distance may be used to infer a distance between microwave dish 1010 and physical obstructions 1030 by performing geometric calculations taking account of precaution distance 1000DB (which may be included to enable safe maintenance of the sensor without causing network downtime). Microwave dish 1010 and distance meter 1020 provide field information to SON solution server 1050, which is configured to communicate with TX management server 1040. TX management server 1040 then generates system commands to adjust the power of the microwave link or to change modulation until a detected problem is solved physically. Additionally, the SON solution server 1050 may notify transport teams of a blockage immediately once a change field distance reported from distance meter 1020 is detected.

The embodiments of FIG 9 and FIG 10 may be combined with controllers and additional sensors described in relation to FIG 4 and 5, respectively.

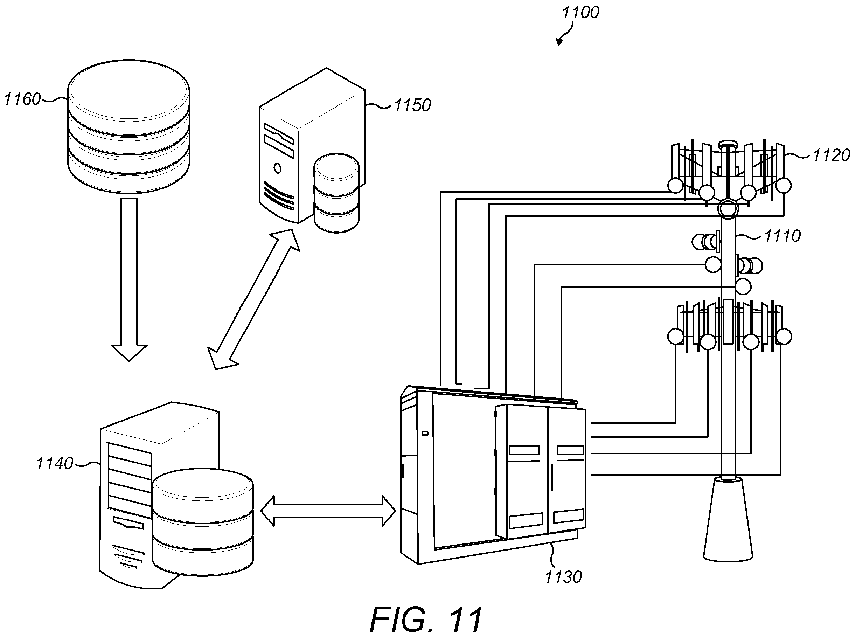

FIG 11 shows an additional preferred embodiment of the present invention relating to a communication system 1100, which comprises a transmitter 1110, sensors 1120, base station (radio + transport) equipment 1130, SON server 1140, OSS sever and database 1150 and radio planning geo-information (RPGI) database 1160.

In use, sensors 1120 provide sensor data associated with transmitter 1110. Sensors 1120 are communicatively coupled to base station equipment 1130 so as to provide the sensor data to the base station equipment 1130. The base station equipment 1130 is communicatively coupled with SON server 1140 and provides sensor data and current operating parameters of transmitter 1110 to the SON server 1140. SON server 1140 receives data from RPGI database 1160 and OSS server and database 1150. SON server 1140 determines new operating parameters for transmitter 1110 using one or more of: sensor data; current operating parameters of the transmitter 1110; RPGI data; and OSS server data. SON server 1140 then communicates new operating parameters for the communication system (which may include operating parameters relating to transmitters not shown in FIG 11) and communicates to transmitter 1110 any new operating parameters that relate to transmitter 1110. However, operating parameters relating to any other transmitter (e.g. one that may compensate for an adjustment in transmission characteristics of transmitter 1110) are not communicated to transmitter 1110 so as to avoid wasted bandwidth.

Data from RPGI database 1160 may comprise geographical information for the network and site location. Such data may be used during identifying candidate best neighbour sites, which enable a communication system can to mitigate the power reduction action for a particular concerned sector using neighbouring sectors. In the embodiment of FIG 11, data from RPGI database 1160 and OSS server and database 1150 may be retrieved by SON server 1140 periodically to be stored and used the in the SON module database. In this way, geographical developments (e.g. new buildings) can be accounted for in determining operating parameters for communication system 1100.

The flow shown in FIG 11 could be utilised during an initialisation process and/or during a calibration process. Calibration processes may occur automatically at predefined intervals or when data retrieved from RPGI database 1160 indicates that this may be necessary.

FIG 12 shows communication methods 1200 between an operations support system 1200A and a SON server 1200B in accordance with a further embodiment of the present invention. FIG 12 comprises steps 1210-1280. As shown in FIG 12, OSS 1200A and SON server 1200B exchange data and instructions. OSS 1200A comprises a 2G/3G/LTE (parameter and/or settings) database 1210A and a 2G/3G/LTE (OSS) command line 1280A. FIG 12 demonstrates how responsibilities for managing network operations can be divided between OSS 1200A and SON server 1200B.

During operation, Information from OSS parameter and/or settings database 1210A is exchanged with SON server 1200B at step 1210. SON server 1200B analyses received data 1220, categorises sites and their settings 1230 and takes an image of current parameter values in case a parameter roll-back is required 1240. Then, SON server 1200B performs an algorithm to determine new parameters and to check that the determined new parameters reduce a hazardous range at step 1250. SON server 1200B then performs algorithms 1260 to check whether the new settings is detrimental to the key performance indicators (KPIs) for the network that comprises OSS 1200A and SON server 1200B. Based on this assessment, SON server 1200B then generates a script to provide a total solution including, for example, parameter tuning 1270. This script and/or new parameters are communicated to a command line of the 2G/3G/LTE (OSS) command line 1280A.

Although FIG 12 shows 2G/3G/LTE technology, it will be understood that any network technology would benefit from the methods disclosed.

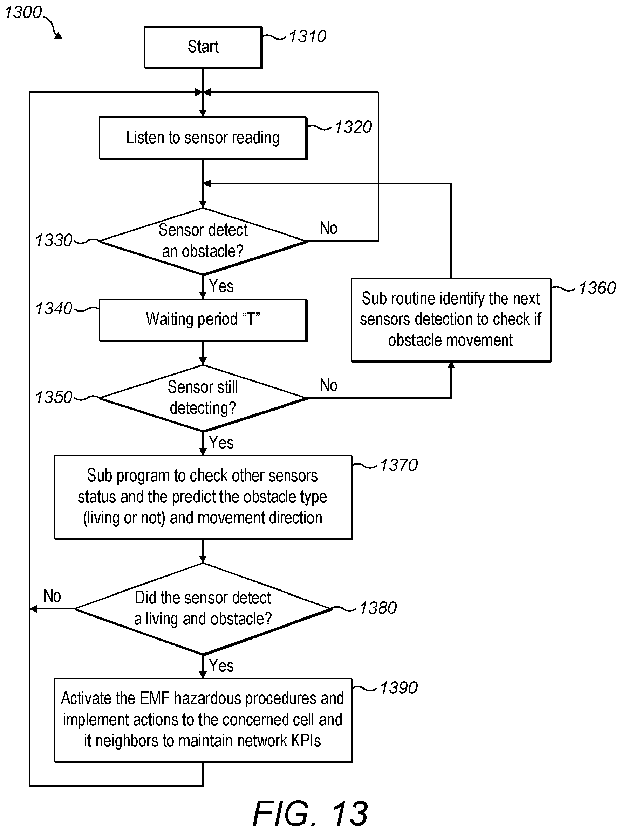

FIG 13 shows main program functionality embodied in method 1300. Method 1300 comprises steps 1310-1390 and may be performed using the apparatuses of any previously described communication systems.

During operations, a sensor provides sensor readings. Method 1300 initialises 1310 and then listens for sensor readings 1320. At step 1330, it is determined if the sensor readings indicate the presence of an obstacle (or object) in the vicinity of, for example, a transmitter in a network. If no such obstacle is deemed to be present, then the method returns to step 1320 and continues listening to sensor readings. If an obstacle is detected at step 1330, then method 1300 waits a period "T" 1340 and then determines whether the sensor readings indicate that the sensor is still detecting an obstacle 1350. If at step 1350 the sensor readings indicate that an obstacle is no longer present, a sub-routine 1360 executes that causes additional sensors to determine if the obstacle has moved from the field of view of the sensor to the field of view of a different sensor, and method 1300 returns to step 1330 so as to classify and analyse the sensor readings of the different sensor. However, if at step 1350 the sensor readings indicate that the obstacle is still present, then sub-program 1370 is executed to check the status of other sensors to predict the obstacle type (e.g. living or not) and the movement direction of the obstacle. Based on the output of this sub program, it is determined at step 1380 whether the obstacle is living. If no living obstacle was identified, then method takes no action and returns to step 1320 to continue listening for sensor readings. If it is determined that the obstacle is a living obstacle, then the method activates EMF hazardous procedures and implements actions to the concerned cell and neighbouring cells to maintain network KPIs at step 1390. Once the EMF hazardous procedures are complete, the method 1300 returns to step 1320 and continue listening to sensor readings so as to provide persistent and dynamic adjustments of the operating parameters of a communication system.

Whilst not explicitly shown in FIG 13, listening for sensor readings 1320 may comprise periodically receiving sensor readings. Moreover, FIG 13 does not explicitly classify the types of sensor producing the sensor readings at each step. The sensor readings in steps 1320-1360 may comprise proximity sensor data provided by proximity sensors. Steps 1370 and 1380 may comprise analysing infrared sensor data to classify an obstacle as living or not living based on infrared radiation emitted (or not, as the case may be) by the obstacle.

Additionally, the system of FIG 13 may operate without performing steps 1340, 1350, 1360 and 1370. For instance, it may not always be necessary to wait for an interval "T" to expire before taking action and in some cases, it may be especially advantageous not to wait before taking action. A decision not to wait before taking action could be made based on current operating parameters of a communication system, for instance. For example, if a transmitter (such as an antenna or microwave dish) in a network or communication system is known to be transmitting a high amount of power, the presence of any obstacle (living or otherwise) may trigger an EMF hazardous procedure 1380.

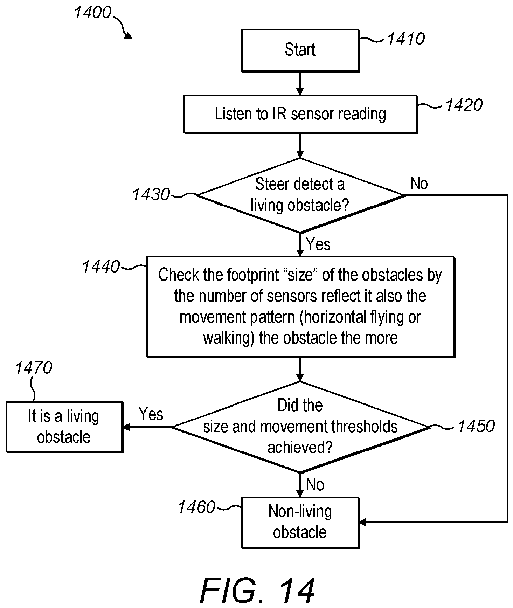

FIG 14 shows sub-program functionality for determining whether an obstacle is living. FIG 14 could relate to sub-program 1370 in FIG 13, but FIG 14 may also execute as standalone functionality. In particular, FIG 14 demonstrates a sub-program method 1400 comprising steps 1410-1470.

Method 1400 initialises 1410 and then listens for infrared sensor readings at step 1420. If an infrared sensor reading indicates at step 1430 that a living obstacle may be present, then method 1400 proceeds to step 1440. Here, the sensor reading footprint of the obstacle is checked. For instance, the size of the obstacle may be determined by analysing the number of sensors that detect the obstacle, and the movement pattern (e.g. horizontal flying or walking) may be used to classify of the obstacle as living or non-living. At step 1450, it is determined whether size and movement thresholds are met. If the obstacle is non-living, method 1400 returns to step 1430 to continue attempting to detect living obstacles. If the obstacle is living, method proceeds to step 1470.

Steps 1440 and 1450 may classify obstacles according to the movement pattern and infrared signature of the obstacle. For instance, the movement pattern and infrared signature of a car driving past an infrared sensor will be quite different to the movement pattern and infrared signature of a bird flying past or a human walking nearby. Therefore, steps 1440 and 1450 are able to classify whether an obstacle is a living being, and if so then what type of living being the obstacle is.

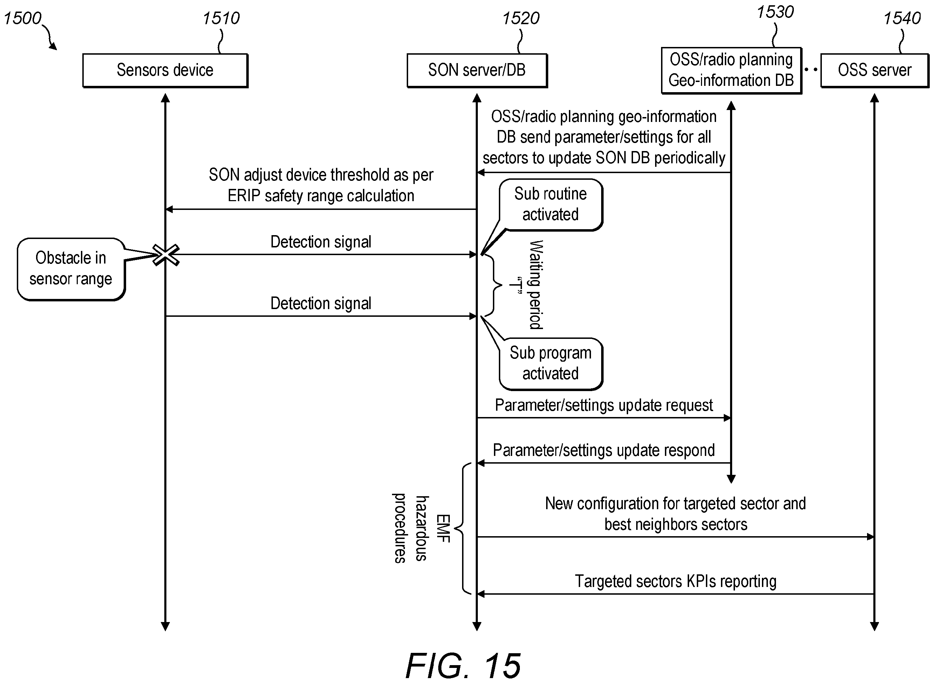

FIG 15 shows an overview of functional architecture of an EMF solution according to a further embodiment of the present invention. FIG 15 includes a communication system that comprises sensor devices 1510, SON server/database 1520, OSS/RPGI database 1530 and OSS server 1540. OSS/RPGI database 1530 and OSS server 1540 are communicatively coupled and may exchange data or information readily. FIG 15 illustrates how steps of some of the methods described above may be divided amongst different entities and performed at different locations in an EMF solution. FIG 15 further shows how certain functional elements of the present may be communicatively coupled together. FIG 15 can be considered to be a timeline with time running vertically from the top to the bottom of FIG 15.

Functional architecture 1500 shows how OSS/RPGI database 1530 passes parameters and/or settings for all sectors to update a SON database periodically. SON server/database 1520 will receive such information and subsequently adjust thresholds of devices (e.g. sensors and/or transmitters), as determined by ERIP safety range calculations. In operation, an obstacle in range of a sensor is detected by sensor device 1510 and a detection signal is sent to SON server/database 1520 when the obstacle is in violation of the device threshold (as determined by ERIP calculations). A sub-routine, such as sub-routine 1360 of FIG 13, is then executed. After a wait period "T", a further detection signal is received at SON server/database 1520 and a sub-program such as sub-program 1370 of FIG 13 or sub-program 1400 of FIG 14 is executed. SON server/database 1520 communicates a parameter/settings update request to OSS/RPGI database 1530 which then responds by providing the requested parameter/settings updates to Son server/database 1520. EMF hazardous procedures, as described extensively throughout the present disclosure, are then executed. New configuration information for the targeted sector and the best neighbour sectors are communicated to OSS server 1540 and OSS serve 1540 provides reports of the KPIs of the targeted sector to SON server/database 1520.

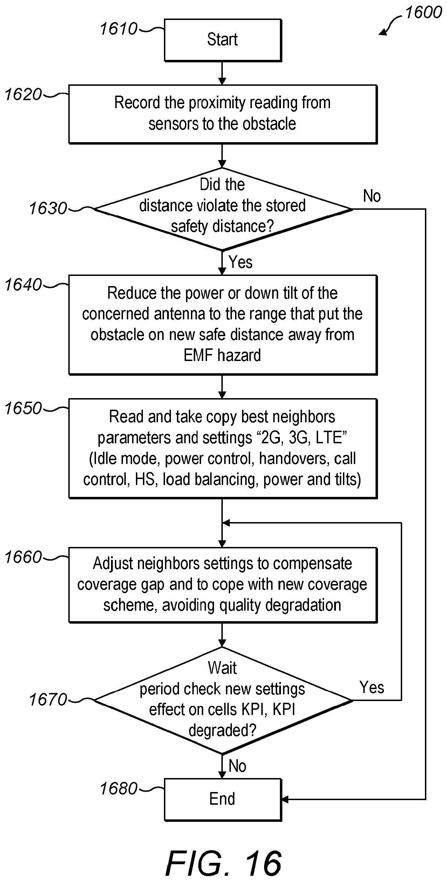

FIG 16 shows an embodiment of the present invention comprising a hazard-detection procedure in an EMF solution. In particular, FIG 16 shows a method 1600 for performing an EMF hazardous procedure that may be implemented in the embodiments of FIG 13 and FIG 15. After initialising 1610, method 1600 records proximity readings from a sensor 1620 and determines whether these violate a stored safety distance for the sensor 1630. If the safety distance is not violated, method 1600 terminates. However, if the safety distance is violated, method 1600 reduces the power or tilt of the concerned antenna to a range that would put the obstacle at a safe distance from the EMF hazard (i.e. the antenna). Then, method 1600 takes copies of parameters and/or settings of candidate best neighbour cells, which could use 2F, 3G, LTE or any other technology. Such parameters and/or settings include information describing any one or more of: idle mode; power control; handovers; call control; HS; load balancing; power; and tilts. Method 1600 then adjusts neighbour settings to compensate for the coverage gap caused by step 1640 and to ensure that the new coverage scheme does not degrade service quality. After a wait period, the method checks whether the new settings that have been implemented have led to any effect on KPIs of cells in the network. If any effect has occurred, method 1600 repeats step 1660 in order to attempt to reduce the impact of the EMF hazardous procedures on network service quality. If step 1670 determines that the KPIs for the concerned cells are unaffected, then method 1600 ends 1680.

It will be appreciated that a number of further adjustments to reduce the radiation incident on the obstacle may be performed at step 1640, in addition to or instead of reducing the tilt or power of the antenna. For instance, the radiation pattern or transmission frequency of the antenna could also be adjusted to reduce the radiation incident on the obstacle and thereby ensure that acceptable EMF doses are incident on the obstacle.

Although FIG 16 shows 2G/3G/LTE technology, it will be understood that any network technology would benefit from the methods disclosed.

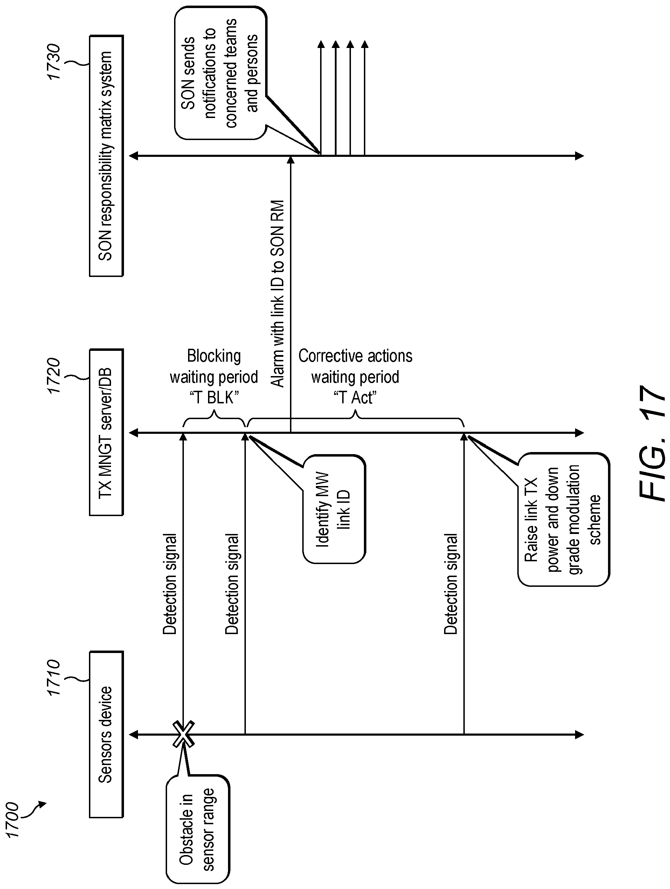

FIG 17 shows an overview of functional architecture of an LOS solution in a further embodiment of the present invention. FIG 17 is in some respects analogous to the architecture of FIG 15. FIG 17 includes a communication system that comprises sensor devices 1710, TX management server/database 1720, and SON responsibility matrix system (RMS) 1730. FIG 17 illustrates how steps of some of the methods described above may be divided amongst different entities and performed at different locations in an LOS solution. FIG 17 further illustrates how communicative couplings between elements of the system operate in practice. FIG 17 can be considered to be a timeline with time running vertically from the top to the bottom of FIG 17.

In use, a sensor device 1710 associated with a microwave dish detects an obstacle in the sensor range. After a blocking waiting period "T BLK", a further detection signal is received at TX management server/database. Receipt of this second detections signal commences a corrective action waiting period "T Act". The start time of period "T Act" may be the point in time at which the microwave dish is shut down to prevent irradiating an object with microwaves. Moreover, it may be determined, using any of the described motion detection algorithms and infrared analysis algorithms, that the obstacle is likely to cause network disruption. On the basis of determining that disruption is likely, it may therefore be determined that it would be more cost-efficient to cease operations of the microwave dish immediately than to continue transmitting whilst unable to provide effective network performance. Additionally, "T Act" may also be a point in time at which a transmission power of the microwave dish is simply reduce to a non-zero value.

During "T Act", the Link ID of the microwave dish concerned is identified by TX management server/database. This link ID is provided by TX management server/database 1720 to SON RMS 1730 as part of an alarm communication. SON RMS 1730 then sends notifications of this alarm to concerned teams and personnel. At expiry of the corrective action waiting period "T Act", a further detection signal may be provided from sensor device 1710 to TX management server 1720. Depending upon whether this detection data

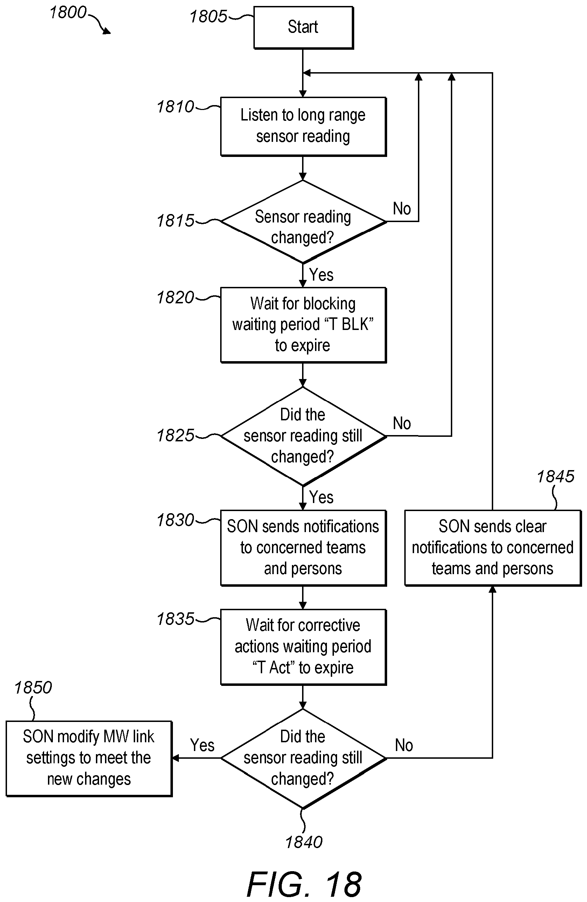

FIG 18 shows an embodiment of the present invention in which a method 1800 of executing the functionality of an LOS is performed. In particular, FIG 18 shows a method 1800 for performing the LOS functionality illustrated in the functional architecture shown in FIG 17.

After initialising 1805, method 1800 listens to long-range sensor readings from a sensor 1810 and determines whether these long-range sensor readings have changed with respect to initial (which may be determined to be acceptable) long-range sensor readings 1815. If the long-range sensor readings are unchanged, method 1800 returns to step 1810 and continues to listen to long-range sensor readings. However, if the long-range sensor readings are different to previous long-range sensor readings, method 1800 commences a blocking waiting period "T BLK" and waits for this period to expire 1820. If at the end of the period "T BLK" the long-range sensor readings are now the initial long-range sensor readings, then method 1800 returns to step 1810 and listens to long-range sensor readings. However, if at the end of the period "T BLK" the long-range sensor readings are still changed, then method 1800 proceeds to send notifications to concerned teams and personnel at step 1830. Such notifications may comprise OM notifications indicating that action is required. Method 1800 then determines after expiry of a corrective action waiting period "T Act" 1835 whether the long-range sensor readings are still different to the initial long-range sensor readings 1840. If the long-range sensor readings have returned to the initial value (e.g. because notified teams and/or personnel have taken action), then method 1800 returns to step 1810 and monitors long-range sensor readings again. However, if the long-range sensor readings are still different to the initial long-range sensor readings, then a SON server or solution will modify microwave link settings at step 1850, in view of the changes to the long-range sensor readings that have occurred.

As in the embodiment of FIG 17, method of FIG 18 may shut down operations of the microwave dish immediately upon detection of an object. Additionally, the point in time at which period "T Act" commences may also be a point in time at which a transmission power of the microwave dish is reduced to a non-zero value.

In the embodiments of FIG 17 and FIG 18, a SON solution or TX management server/database may determine that detection of an obstacle is likely to lead to network disruption but that alternative microwave links (or any other transmission means within the network) may be able to provide more capacity to compensate from such disruption. Accordingly, the above-described embodiments in which compensatory actions are taken by other entities within a communication system in order to maintain EMF compliance may be applied analogously in respect of the embodiments described in FIG 17 and FIG 18.

As will be appreciated, a principle underlying many embodiments of the EMF/LOS embedded antenna system is the use of EMF/LOS calculations with a distance sensor deployed on site, with a comparison of a free range in the vicinity of a transmitter against EMF compliance/LOS distances. The information regarding the actual free range in front of each antenna has multiple uses, from producing an OM alert to automatically setting and/or retuning system settings, executed by a SON platform. The embedded antenna system may not necessarily replace the normal access producer, but it will improve EMF compliance and LOS blockage prediction.

The EMF/LOS embedded antenna system may record any proximity variation in front of radio antennas/microwave (MW) dishes via sensors, as shown in FIG 4 and FIG 5. The free distance for each sector is compared with the safety or acceptable distance calculated by the EMF/LOS embedded antenna system. The EMF/LOS embedded antenna system will judge whether this proximity variation violates a safety distance or cuts a microwave LOS. If so then it will contact, for example, iNetwork (or any other SON solution) to modify the parameters of the violating cell so as to ensure that the proximity data matches the safety distance with in the case of an EMF compliance scenario.

The SON solution (e.g. iNetwork) may further include a smart responsibility matrix capability, which could be used once EMF/LOS system detects a violation or risk. This smart responsibility matrix could be used to alert relevant personnel. Such functionality enables quick detection and resolution of issues caused by obstacles.

The embodiments described above may create a regionalised database for all sectors and provide analysis such as, for example, the number or frequency of violations, the types of violation (based on the pattern recognition algorithms), and areas and/or regions with high rates of safety violations.

In order to provide a sensor arrangement that is essentially "zero maintenance" (e.g. will not accrue a significant build-up of dirt that impairs performance over time), the sensors may be installed inside the antenna housing so they are away from climate effects. However, the system will be provided at a fixed physical location or reference point to be used for frequent calibrations. This leads to systems that are accurate and easy to maintain, ensuring that network performance is maintained to high standards even when safety procedures necessitate reducing transmission powers in the network.

Embodiments of the present invention include aspects of Doppler effect theory, the radar equation, mobile satellite communication networks, microprocessor programming, and AI algorithms implemented by an iNetwork solution.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

**Claims**

1. A communication system having operating parameters, the communication system comprising:

   first (210) and second (220) transmitters;
   a sensor (240, 250, 260) for providing data describing a detected object (270, 280); and
   a controller (230) configured to:

      determine new operating parameters for the communication system, based on current operating parameters and the sensor data, so as to increase an incident radiation received at the object (270, 280) from the second transmitter (220) and to compensate for a reduction in incident radiation received at the object (270, 280) from the first transmitter (210) with an increase in incident radiation received at the object (270, 280) from the second transmitter (220);
      prior to instructing any compensatory changes to the operating parameters, determine whether the second transmitter (220) would excessively irradiate an object (270, 280) in the vicinity of the second transmitter (220); and
      cause the communication system to continue transmitting with the new operating parameters.

2. The communication system of claim 1, wherein the controller (230) is further configured to determine whether the current operating parameters need to be changed based on the current operating parameters and the sensor data, wherein the location of the object (270, 280) is unsafe with the current operating parameters and safe with the new operating parameters.

3. The communication system of claim 1 or 2, wherein the controller (230) is configured to:

   determine a safe distance from the first transmitter (210) for the current operating parameters; and
   cause the communication system to continue transmitting with the new operating parameters when the sensor data indicates that the object (270, 280) is not within the safe distance.

4. The communication system of any preceding claim, wherein the controller (230) is configured to:

   determine an indication of incident radiation received at the object (270, 280) from the first transmitter (210) based on the sensor data and the current operating parameters; and
   cause the communication system to continue transmitting with the new operating parameters when the incident radiation received at the object (270, 280) is above a threshold value.

5. The communication system of any preceding claim, wherein the controller (230) is configured to determine the new operating parameters so as to decrease an incident radiation received at the object (270, 280) from the first transmitter (210).

6. The communication system of any preceding claim, wherein the controller (230) is further configured to:

repeat the determination of the new operating parameters for the communication system, based on new sensor data obtained after an interval; and

cause the communication system to continue transmitting with the new operating parameters.

7. The communication system of any preceding claim, wherein the sensor data is proximity data indicating a proximity of the object (270, 280) in relation to the first transmitter (210).

8. The communication system of any preceding claim, wherein the controller (230) is configured to cause the communication system to continue transmitting with the new operating parameters based on any one or more of:

an analysis of a duration of time in which the object (270, 280) is detected by the sensor (240, 250, 260);
an analysis of a reflection footprint of the object (270, 280); and
an analysis of a pattern of motion of the object (270, 280).

9. The communication system of any preceding claim, further comprising an infrared sensor (260) configured to generate infrared data describing the detected object (270, 280), wherein the controller (230) is configured to:

analyse the infrared data to determine if the object (270, 280) is a person or an animal; and
cause the communication system to continue transmitting with the new operating parameters based on the analysis of the infrared data.

10. The communication system of any preceding claim, wherein the operating parameters comprise any one or more of:

a transmission power of the first and/or second transmitter;
an orientation of the first and/or second transmitter;
a radiation pattern the first and/or second transmitter; and
a transmission frequency of the first and/or second transmitter.

11. The communication system of any preceding claim, wherein the controller (230) is configured to determine operating parameters based on an equivalent isotropically radiated power of the first and/or second transmitter.

12. The communication system of claim 1, wherein the communication system comprises a second sensor (240, 250, 260) associated with the second transmitter (220) for providing second sensor data describing a second detected object (270, 280), wherein the controller is configured to:

determine new operating parameters at which the second sensor data is a safe value, based on current operating parameters and the second sensor data; and
cause the communication system to continue transmitting with the new operating parameters.

13. A method of controlling a communication system comprising first (210) and second transmitters (220), the communication system transmitting with operating parameters, the method comprising:

receiving data describing a detected object (270, 280);
determining new operating parameters, based on current operating parameters and the data describing the detected object (270, 280), so as to increase an incident radiation received at the object (270, 280) from the second transmitter (220) and to compensate for a reduction in incident radiation received at the object (270, 280) from the first transmitter (210) with an increase in incident radiation received at the object (270, 280) from the second transmitter (220);
prior to instructing any compensatory changes to the operating parameters, determine whether the second transmitter (220) would excessively irradiate an object (270, 280) in the vicinity of the second transmitter (220); and
causing the communication system to continue transmitting with the new operating parameters.

**Patentansprüche**

1. Kommunikationssystem mit Betriebsparametern, wobei das Kommunikationssystem umfasst:

erste (210) und zweite (220) Sender;
einen Sensor (240, 250, 260) zum Bereitstellen von Daten, die ein erkanntes Objekt (270, 280) beschreiben; und
eine Steuereinheit (230), konfiguriert zum:

Ermitteln neuer Betriebsparameter für das Kommunikationssystem, basierend auf aktuellen Betriebsparametern und den Sensordaten, um eine an dem Objekt (270, 280) empfangene einfallende Strahlung von dem zweiten Sender (220) zu erhöhen und um eine Verringerung der an dem Objekt (270, 280) empfangenen einfallenden Strahlung von dem ersten Sender (210) mit einer Erhöhung der an dem Objekt (270, 280) empfangenen einfallenden Strahlung von dem zweiten Sender (220) zu kompensieren;
vor dem Anweisen kompensatorischer Änderungen an den Betriebsparametern, Ermitteln, ob der zweite Sender (220) ein Objekt (270, 280) in der Nähe des zweiten Senders (220) übermäßig bestrahlen würde; und
Veranlassen, dass das Kommunikationssystem weiter mit den neuen Betriebsparametern übermittelt.

2. Kommunikationssystem nach Anspruch 1, wobei die Steuereinheit (230) ferner konfiguriert ist, um basierend auf den aktuellen Betriebsparametern und den Sensordaten zu ermitteln, ob die aktuellen Betriebsparameter geändert werden müssen, wobei die Position des Objekts (270, 280) mit den aktuellen Betriebsparametern unsicher und mit den neuen Betriebsparametern sicher ist.

3. Kommunikationssystem nach Anspruch 1 oder 2, wobei die Steuereinheit (230) konfiguriert ist zum:

Ermitteln einer sicheren Entfernung von dem ersten Sender (210) für die aktuellen Betriebsparameter; und
Veranlassen, dass das Kommunikationssystem weiter mit den neuen Betriebsparametern übermittelt, wenn die Sensordaten darauf hinweisen, dass sich das Objekt (270, 280) nicht innerhalb der sicheren Entfernung befindet.

4. Kommunikationssystem nach einem vorhergehenden Anspruch, wobei die Steuereinheit (230) konfiguriert ist zum:

Ermitteln eines Hinweises einer an dem Objekt (270, 280) empfangenen einfallenden Strahlung von dem ersten Sender (210), basierend auf den Sensordaten und den aktuellen Betriebsparametern; und
Veranlassen, dass das Kommunikationssystem weiter mit den neuen Betriebsparametern übermittelt, wenn die an dem Objekt (270, 280) empfangene einfallende Strahlung über einem Schwellenwert liegt.

5. Kommunikationssystem nach einem vorhergehenden Anspruch, wobei die Steuereinheit (230) so konfiguriert ist, dass sie die neuen Betriebsparameter ermittelt, um eine an dem Objekt (270, 280) empfangene einfallende Strahlung von dem ersten Sender (210) zu verringern.

6. Kommunikationssystem nach einem vorhergehenden Anspruch, wobei die Steuereinheit (230) ferner konfiguriert ist zum:

Wiederholen der Ermittlung der neuen Betriebsparameter für das Kommunikationssystem, basierend auf neuen Sensordaten, die nach einem Intervall erhalten wurden; und
Veranlassen, dass das Kommunikationssystem weiter mit den neuen Betriebsparametern übermittelt.

7. Kommunikationssystem nach einem vorhergehenden Anspruch, wobei es sich bei den Sensordaten um Näherungsdaten handelt, die auf eine Nähe des Objekts (270, 280) im Verhältnis zu dem ersten Sender (210) hinweisen.

8. Kommunikationssystem nach einem vorhergehenden Anspruch, wobei die Steuereinheit (230) so konfiguriert ist, dass sie veranlasst, dass das Kommunikationssystem weiter mit den neuen Betriebsparametern übermittelt, basierend auf einer oder mehrerer von:

einer Analyse einer Zeitdauer, in der das Objekt (270, 280) durch den Sensor (240, 250, 260) erkannt wird;
einer Analyse einer Reflexionsfläche des Objekts (270, 280); und
einer Analyse eines Bewegungsmusters des Objekts (270, 280).

9. Kommunikationssystem nach einem vorhergehenden Anspruch, weiter umfassend einen Infrarotsensor (260), so konfiguriert, dass Infrarotdaten generiert werden, die das erkannte Objekt (270, 280) beschreiben, wobei die Steuereinheit (230) konfiguriert ist zum:

Analysieren der Infrarotdaten, um zu ermitteln, ob es sich bei dem Objekt (270, 280) um eine Person oder ein Tier handelt; und

Veranlassen, dass das Kommunikationssystem weiter mit den neuen Betriebsparametern übermittelt, basierend auf der Analyse der Infrarotdaten.

**10.** Kommunikationssystem nach einem vorhergehenden Anspruch, wobei die Betriebsparameter eines oder mehrere umfassen von:

einer Sendeleistung des ersten und/oder zweiten Senders;
einer Ausrichtung des ersten und/oder zweiten Senders;
eines Strahlungsmusters des ersten und/oder zweiten Senders; und
einer Sendefrequenz des ersten und/oder zweiten Senders.

**11.** Kommunikationssystem nach einem vorhergehenden Anspruch, wobei die Steuereinheit (230) so konfiguriert ist, dass sie Betriebsparameter basierend auf einer äquivalenten isotropen Strahlungsleistung des ersten und/oder zweiten Senders ermittelt.

**12.** Kommunikationssystem nach Anspruch 1, wobei das Kommunikationssystem einen zweiten, dem zweiten Sender (220) zugeordneten Sensor (240, 250, 260) zum Bereitstellen zweiter Sensordaten umfasst, die ein zweites erkanntes Objekt (270, 280) beschreiben, wobei die Steuereinheit konfiguriert ist zum:

Ermitteln neuer Betriebsparameter, unter denen die zweiten Sensordaten ein sicherer Wert sind, basierend auf aktuellen Betriebsparametern und den zweiten Sensordaten; und
Veranlassen, dass das Kommunikationssystem weiter mit den neuen Betriebsparametern übermittelt.

**13.** Verfahren zum Steuern eines Kommunikationssystems umfassend erste (210) und zweite Sender (220), wobei das Kommunikationssystem mit Betriebsparametern übermittelt, wobei das Verfahren umfasst:

Empfangen von Daten, die ein erkanntes Objekt (270, 280) beschreiben;
Ermitteln neuer Betriebsparameter, basierend auf aktuellen Betriebsparametern und den Daten, die das erkannte Objekt (270, 280) beschreiben, um eine an dem Objekt (270, 280) empfangene einfallende Strahlung von dem zweiten Sender (220) zu erhöhen und um eine Verringerung der an dem Objekt (270, 280) empfangenen einfallenden Strahlung von dem ersten Sender (210) mit einer Erhöhung der an dem Objekt (270, 280) empfangenen einfallenden Strahlung von dem zweiten Sender (220) zu kompensieren;
vor dem Anweisen kompensatorischer Änderungen an den Betriebsparametern, Ermitteln, ob der zweite Sender (220) ein Objekt (270, 280) in der Nähe des zweiten Senders (220) übermäßig bestrahlen würde; und
Veranlassen, dass das Kommunikationssystem weiter mit den neuen Betriebsparametern übermittelt.

**Revendications**

**1.** Un système de communication possédant des paramètres de fonctionnement, le système de communication comprenant :

un premier (210) et un deuxième (220) émetteur,
un capteur (240, 250, 260) destiné à la fourniture de données décrivant un objet détecté (270, 280), et
un dispositif de commande (230) configuré de façon à :

déterminer de nouveaux paramètres de fonctionnement pour le système de communication, en fonction de paramètres de fonctionnement actuels et des données de capteur, de façon à augmenter un rayonnement incident reçu au niveau de l'objet (270, 280) à partir du deuxième émetteur (220) et à compenser une réduction dans un rayonnement incident reçu au niveau de l'objet (270, 280) à partir du premier émetteur (210) avec une augmentation d'un rayonnement incident reçu au niveau de l'objet (270, 280) à partir du deuxième émetteur (220),
avant d'ordonner toute modification compensatoire aux paramètres de fonctionnement, déterminer si le deuxième émetteur (220) irradierait de manière excessive un objet (270, 280) dans le voisinage du deuxième émetteur (220), et
amener le système de communication à poursuivre la transmission avec les nouveaux paramètres de fonctionnement.

2. Le système de communication selon la Revendication 1, où le dispositif de commande (230) est configuré en outre de façon à déterminer si les paramètres de fonctionnement actuels ont besoin d'être modifiés en fonction des paramètres de fonctionnement actuels et des données de capteur, où l'emplacement de l'objet (270, 280) est non sûr avec les paramètres de fonctionnement actuels et sûr avec les nouveaux paramètres de fonctionnement.

3. Le système de communication selon la Revendication 1 ou 2, où le dispositif de commande (230) est configuré de façon à :

déterminer une distance de sécurité à partir du premier émetteur (210) pour les paramètres de fonctionnement actuels, et
amener le système de communication à poursuivre la transmission avec les nouveaux paramètres de fonctionnement lorsque les données de capteur indiquent que l'objet (270, 280) n'est pas à l'intérieur de la distance de sécurité.

4. Le système de communication selon l'une quelconque des Revendications précédentes, où le dispositif de commande (230) est configuré de façon à :

déterminer une indication d'un rayonnement incident reçu au niveau de l'objet (270, 280) à partir du premier émetteur (210) en fonction des données de capteur et des paramètres de fonctionnement actuels, et
amener le système de communication à poursuivre la transmission avec les nouveaux paramètres de fonctionnement lorsque le rayonnement incident reçu au niveau de l'objet (270, 280) est supérieur à une valeur seuil.

5. Le système de communication selon l'une quelconque des Revendications précédentes, où le dispositif de commande (230) est configuré de façon à déterminer les nouveaux paramètres de fonctionnement de façon à diminuer un rayonnement incident reçu au niveau de l'objet (270, 280) à partir du premier émetteur (210).

6. Le système de communication selon l'une quelconque des Revendications précédentes, où le dispositif de commande (230) est configuré en outre de façon à :

répéter la détermination des nouveaux paramètres de fonctionnement pour le système de communication, en fonction de nouvelles données de capteur obtenues après un intervalle, et
amener le système de communication à poursuivre la transmission avec les nouveaux paramètres de fonctionnement.

7. Le système de communication selon l'une quelconque des Revendications précédentes, où les données de capteur sont des données de proximité indiquant une proximité de l'objet (270, 280) en relation avec le premier émetteur (210).

8. Le système de communication selon l'une quelconque des Revendications précédentes, où le dispositif de commande (230) est configuré de façon à amener le système de communication à poursuivre la transmission avec les nouveaux paramètres de fonctionnement en fonction d'une ou de plusieurs analyses parmi :

une analyse d'une durée au cours de laquelle l'objet (270, 280) est détecté par le capteur (240, 250, 260),
une analyse d'une empreinte de réflexion de l'objet (270, 280), et
une analyse d'un modèle de mouvement de l'objet (270, 280).

9. Le système de communication selon l'une quelconque des Revendications précédentes, comprenant en outre un capteur infrarouge (260) configuré de façon à générer des données infrarouges décrivant l'objet détecté (270, 280), où le dispositif de commande (230) est configuré de façon à :

analyser les données infrarouges de façon à déterminer si l'objet (270, 280) est une personne ou un animal, et
amener le système de communication à poursuivre la transmission avec les nouveaux paramètres de fonctionnement en fonction de l'analyse des données infrarouges.

10. Le système de communication selon l'une quelconque des Revendications précédentes, où les paramètres de fonctionnement comprennent l'un quelconque ou plusieurs éléments parmi :

une puissance de transmission du premier et/ou du deuxième émetteur,
une orientation du premier et/ou du deuxième émetteur,
un modèle de rayonnement du premier et/ou du deuxième émetteur, et
une fréquence de transmission du premier et/ou du deuxième émetteur.

11. Le système de communication selon l'une quelconque des Revendications précédentes, où le dispositif de commande (230) est configuré de façon à déterminer des paramètres de fonctionnement en fonction d'une puissance isotrope rayonnée équivalente du premier et/ou du deuxième émetteur.

12. Le système de communication selon la Revendication 1, où le système de communication comprend un deuxième capteur (240, 250, 260) associé au deuxième émetteur (220) destiné à la fourniture de deuxièmes données de capteur décrivant un deuxième objet détecté (270, 280), où le dispositif de commande est configuré de façon à :

déterminer de nouveaux paramètres de fonctionnement pour lesquels les deuxièmes données de capteur sont une valeur sûre, en fonction des paramètres de fonctionnement actuels et des deuxièmes données de capteur, et
amener le système de communication à poursuivre la transmission avec les nouveaux paramètres de fonctionnement.

13. Un procédé de commande d'un système de communication comprenant un premier (210) et un deuxième émetteur (220), le système de communication transmettant avec des paramètres de fonctionnement, le procédé comprenant :

la réception de données décrivant un objet détecté (270, 280),
la détermination de nouveaux paramètres de fonctionnement, en fonction des paramètres de fonctionnement actuels et des données décrivant l'objet détecté (270, 280), de façon à augmenter un rayonnement incident reçu au niveau de l'objet (270, 280) à partir du deuxième émetteur (220) et à compenser une réduction dans un rayonnement incident reçu au niveau de l'objet (270, 280) à partir du premier émetteur (210) avec une augmentation d'un rayonnement incident reçu au niveau de l'objet (270, 280) à partir du deuxième émetteur (220),
avant d'ordonner toute modification compensatoire aux paramètres de fonctionnement, déterminer si le deuxième émetteur (220) irradierait de manière excessive un objet (270, 280) dans le voisinage du deuxième émetteur (220), et
amener le système de communication à poursuivre la transmission avec les nouveaux paramètres de fonctionnement.

FIG. 1

FIG. 2

300

| Receiving sensor data describing a detected object | ⌐310 |

↓

| Determining new operating parameters for a communication system, based on current operating parameters and the sensor data describing the detected object | ⌐320 |

↓

| Causing communication system to continue transmitting with the new operating parameters | ⌐330 |

## FIG. 3

400

410

420

400DA

430

440

## FIG. 4

**FIG. 5**

**FIG. 6**

FIG. 7

FIG. 8

FIG. 9

EP 3 571 773 B1

**FIG. 10**

FIG. 11

EP 3 571 773 B1

*1200*

*1200A*

OSS

*1210A* — 2G - 3G - LTE
(parameters/settings)
database

*1210*

SON server    *1200B*

Analyze received data — *1220*

categorize sites and its
settings — *1230*

Take image for current
parameters values for
rollback — *1240*

Perform algorithm to
check the suitable new
settings to reduce
hazardous range — *1250*

Perform algorithm to
check the suitable new
settings to maintain
network KPIs — *1260*

*1280A* — 2G - 3G - LTE
(OSS)
command line

*1280*

Generate script for total
solution (parameters
tuning) — *1270*

# FIG. 12

FIG. 13

FIG. 14

FIG. 15

1600

1610 — Start

1620 — Record the proximity reading from sensors to the obstacle

1630 — Did the distance violate the stored safety distance?

No

Yes

1640 — Reduce the power or down tilt of the concerned antenna to the range that put the obstacle on new safe distance away from EMF hazard

1650 — Read and take copy best neighbors parameters and settings "2G, 3G, LTE" (Idle mode, power control, handovers, call control, HS, load balancing, power and tilts)

1660 — Adjust neighbors settings to compensate coverage gap and to cope with new coverage scheme, avoiding quality degradation

1670 — Wait period check new settings effect on cells KPI, KPI degraded?

Yes

No

1680 — End

FIG. 16

1700

1710

1720

1730

Sensors device

TX MNGT server/DB

SON responsibility matrix system

Obstacle in sensor range

Detection signal

Detection signal

Blocking waiting period "T BLK"

Identify MW link ID

Alarm with link ID to SON RM

SON sends notifications to concerned teams and persons

Corrective actions waiting period "T Act"

Detection signal

Raise link TX power and down grade modulation scheme

*FIG. 17*

EP 3 571 773 B1

1800

1805 — Start

1810 — Listen to long range sensor reading

1815 — Sensor reading changed? — No

Yes

1820 — Wait for blocking waiting period "T BLK" to expire

1825 — Did the sensor reading still changed? — No

Yes

1830 — SON sends notifications to concerned teams and persons

1845 — SON sends clear notifications to concerned teams and persons

1835 — Wait for corrective actions waiting period "T Act" to expire

1850 — SON modify MW link settings to meet the new changes

Yes — Did the sensor reading still changed? — No

1840

FIG. 18

## REFERENCES CITED IN THE DESCRIPTION

**Patent documents cited in the description**

- US 5440290 A
- US 7937124 A
- WO 2013190410 A1
- WO 2016058938 A1
- EP 2958347 A1